# EUROPEAN PATENT SPECIFICATION

(11) **EP 3 636 523 B1**
(45) Date of publication and mention of the grant of the patent: **02.06.2021**
(21) Application number: 19201630.1
(22) Date of filing: 07.10.2019
(51) Int. Cl.: B62J 9/14, B62J 43/00, B62J 43/30, B62K 19/46, B62M 6/90

(54) **STRADDLE-TYPE VEHICLE**
GRÄTSCHSITZFAHRZEUG
VÉHICULE DE TYPE À ENFOURCHER

(30) Priority: 12.10.2018 CN 201811188566
(43) Date of publication of application: 15.04.2020
(73) Proprietor: YAMAHA HATSUDOKI KABUSHIKI KAISHA, Iwata-shi, Shizuoka 438-8501 (JP)
(72) Inventor: CHEN, Yung-Lun, Taoyuan City 320 (TW)
(74) Representative: Grünecker Patent- und Rechtsanwälte PartG mbB

(56) References cited:
- EP-A1- 2 783 956
- JP-A- H0 880 884
- JP-A- 2002 205 610
- JP-A- 2002 211 468

## Description

The present invention relates to a straddle-type vehicle, and more particularly to thievery prevention of a seat locking device of a straddle-type vehicle.

Previously, with respect to a straddle-type vehicle, it is known that a seat locking device locking a seat portion is disposed at the rear portion of the vehicle.

For example, in the straddle-type vehicle described in JP 2015-67249 A, a seat locking device is provided. When the seat portion is closed, a seat hook disposed at the rear portion of the seat portion and extending downwards is stuck and locked by a seat lock member, so that the seat portion is fixed on a vehicle body.

Therefore, a locked space is formed in a storage box disposed below the seat portion. In addition, in the straddle-type vehicle described in JP 2015-67249 A, a shielding cover of a container shape is provided, the shielding cover becomes a press hook used for preventing an unlocking operating member from separating from a slot, and covers the seat lock member from the rear side. Therefore, the unlocking operating member may be prevented from separating from the slot.

On the other hand, as described in JP 2004-331069 A, it is known that a kind of straddle-type vehicle is provided with a control circuit used for performing electronic control on vehicle-mounted electronic parts by controlling the fuel injection amount or time sequence and the like of an injector, and a vehicle electronic control device (a controller) is provided at the rear portion of the vehicle. In addition, in JP 2004-331069 A, the vehicle electronic control device is powered by a battery, and therefore, to shorten an electric wire connecting the battery with the vehicle electronic control device, a constitution that the battery and the vehicle electronic control device are disposed to be adjacent is disclosed.

Moreover, in recent years, a vehicle electronic control device with both a driving circuit and a control circuit is provided on a vehicle, namely, the so-called starting generator control unit (SGCU)-type vehicle electronic control device, wherein the driving circuit drives an electric motor, and the control circuit controls the on-off action of the driving circuit to drive the electric motor, or controls vehicle-mounted electronic parts. In the SGCU-type vehicle electronic control device, the driving circuit is formed by parts with relatively great heat generation quantity, for example, heat generating elements including a field effect transistor (FET) and the like. On the other hand, the control circuit is formed by parts with heat generation quantity smaller than that of the driving circuit. Therefore, compared with the previous vehicle electronic control device described in JP 2004-331069 A, the SGCU-type vehicle electronic control device is greater in volume and also greater in overall heat generation quantity.

In general straddle-type vehicles, an unlocking cable used for unlocking is embedded into a cable slot in the side wall of a base of the seat lock member. However, the cable slot is opened backwards, and therefore, the unlocking cable may be separated from the cable slot toward the rear side. Therefore, a person knowing the disposition position of the seat lock member may pull out or invalidate the unlocking cable (the unlocking operating member) by using a tool via a gap or a hole between the parts of the vehicle body. Especially, as described below, that is, a slim tool can be inserted into the vehicle from an angle directly or indirectly accessing the seat lock member, for example, behind or below the vehicle, to move the unlocking cable along a direction enabling the unlocking cable to separate toward the rear side from the cable line slot, and then stealing or trick by unlocking the seat lock member may occur.

To solve the problem of stealing or trick, in the straddle-type vehicle described in JP 2015-67249 A, a shielding cover covering the seat lock member from the rear side is provided, so as to prevent the unlocking cable from separating from the cable slot, and thus being regarded as being beneficial to preventing stealing or trick to the seat lock member.

However, in the vehicle described in JP 2015-67249 A, if the shielding cover covering the seat lock member from the rear side is formed as an independent unit to prevent stealing or trick to the seat lock member, time and efforts are further needed. For example, to cover the whole seat lock member, the shielding cover needs to be formed in a manner of being capable of accommodating the recess of the seat lock member. Moreover, to prevent the shielding cover from occupying a relatively large space in the vehicle, the surface of the shielding cover needs to be formed in combination with the shape of the seat lock member, and then mounting holes and mounting seats for mounting the shielding cover or fastening parts such as bolts and nuts are needed.

Therefore, to eliminate the defects that the shielding causes, emphasis may put on the disposition of the vehicle electronic control device and the battery at the rear portion of the straddle-type vehicle described in JP 2004-331069 A. In the straddle-type vehicle described in JP 2004-331069 A, the vehicle electronic control device and the battery are disposed at the rear portion of the vehicle, and therefore, research is performed on whether the vehicle electronic control device and the battery can function as protective elements for protecting a seat locking device which is also provided at the rear portion of the vehicle and further forward.

The result is that, the following scheme is proposed. That is, in view of the JP 2015-67249 A, the shielding cover consuming much time and efforts is abandoned, instead, as described in JP 2004-331069 A, a battery for supplying electric current to the vehicle electronic control device is disposed to be adjacent to the vehicle electronic control device and behind the seat locking device, so as to shorten an electric wire connecting the vehicle electronic control device with the battery, and the battery can be used as a protecting element for preventing stealing and the like.

However, it has been found that the vehicle electronic control device and the battery described in JP 2004-331069 A are accommodated in a rear storage chamber, and are disposed in a manner substantially the same as the positions in the up-down direction of the vehicle in the rear storage chamber. In the condition that the rear storage chamber described in JP 2004-331069 A is disposed below the seat lock member described in JP 2015-67249 A, illegitimate access from the rear side of the vehicle cannot be prevented, on the other hand, in the condition that the rear storage chamber is disposed behind the seat lock member, illegitimate access from the lower side of the vehicle cannot be prevented, and therefore, illegitimate access from the rear side and the lower side of the vehicle cannot be prevented at the same time. Therefore, even if the disposition of the vehicle electronic control device and the battery described in JP 2004-331069 A is applied to JP 2015-67249 A, stealing or trick to the seat lock member of the vehicle cannot be prevented for sure.

The present invention is developed in view of such circumstances, and the objective of the present invention is to provide a straddle-type vehicle which may still prevent stealing or trick to the seat lock member without the shielding cover that takes much time and efforts. According to the present invention said objective is solved by a straddle-type vehicle having the features of independent claim 1. Preferred embodiments are laid down in the dependent claims.

It has been thought that an SGCU-type vehicle electronic control device with both a driving circuit for driving an electric motor and a control circuit for controlling vehicle-mounted electronic parts is larger in volume in comparison with a previous vehicle electronic control device, and thus has advantage in the aspect of avoiding stealing or trick and the like. It has been further found that by utilizing the advantage of the SGCU-type vehicle electronic control device and the disposition relationship of the SGCU-type vehicle electronic control device and the battery unit, stealing or trick and the like to the seat lock member may be prevented. That is, it has been considered a relative position relationship of the SGCU-type vehicle electronic control device and the battery unit, and sufficiently shielding the seat lock member by the SGCU-type vehicle electronic control device and the battery unit, stealing or trick and the like caused by illegitimate unlocking to the seat locking device may be prevented.

Moreover, in the following description of the present teaching, as long as it is not specifically explained, the so-called "vehicle electronic control device" refers to the SGCU-type vehicle electronic control device with both a driving circuit for driving an electric motor and a control circuit for controlling vehicle-mounted electronic parts.

Specifically, to solve the problem, a battery unit disposed behind the storage box in the front-back direction of the vehicle and the SGCU-type vehicle electronic control device with the driving circuit and the control circuit may be used. The battery unit is disposed in a manner of being located below the seat locking device and overlapping with the seat locking device in a top view of the vehicle. Therefore, access from the lower side of the vehicle is prevented. Moreover, the vehicle electronic control device is disposed behind the battery unit, and the upper edge of the vehicle electronic control device is disposed in a state of protruding further above than the upper wall portion of the battery unit and being located further above than at least a part of the seat locking device. Therefore, access from the rear side of the vehicle is prevented.

The result is that, even if the shielding cover is not set as an independent unit as described in JP 2015-67249 A, a state of being hard to access the seat locking device may be formed, so as to protect the seat locking device by the vehicle electronic control device and the battery unit. Therefore, even a person knowing the disposition position of the seat lock member cannot pull out or invalidate the unlocking operating member (the unlocking cable) by using a tool from the rear side or the lower side of the vehicle, so as to prevent stealing or trick and the like. Therefore, not only is a needless shielding cover saved, but also stealing or trick is prevented.

However, it has been found that in a condition that the upper edge of the vehicle electronic control device is disposed in a state of being located further above than at least a part of the seat locking device, the following new problem is generated.

The vehicle electronic control device with the above structure includes both a control circuit and a driving circuit. As described above, the control circuit controls the action of the driving circuit, correspondingly, the driving circuit drives a driven device, and is generally formed by parts having greater heat generation quantity in comparison with the control circuit carrying a heat generating element such as FET. Therefore, with respect to the disposition of the SGCU-type vehicle electronic control device, heat dissipation needs to be considered and discussed more sufficiently in comparison with the previous vehicle electronic control device without a driving circuit.

A straddle-type vehicle according to the preamble of claim 1 is known from JP 2002-205610 A.

Other straddle types vehicles are known from EP 2 783 956 A1, JP 2002-211468 A or JP-H08 80884 A.

However, in a common straddle-type vehicle, to prevent deterioration of attractiveness caused by exposure of parts in the periphery of the seat locking device to the outside in an opening state of the seat portion, a spacing board is disposed above the seat locking device.

In a condition that the upper edge of the vehicle electronic control device is disposed in a state of being located further above than at least a part of the seat locking device, a heat dissipation space above the vehicle electronic control device is shielded by the spacing board and becomes small, and therefore, influence is caused to the heat dissipation of the vehicle electronic control device.

In other words, in a condition of use of the disposition of the SGCU-type vehicle electronic control device to prevent stealing or trick and the like to seat lock member, how to eliminate influence to the heat dissipation of the SGCU-type vehicle electronic control device while improving the burglar resistant property becomes an important task.

Generally speaking, in a condition that a spacing board is provided, to enable a seat hook disposed at the rear portion of the seat portion in a downward extending manner to pass, an opening is formed in the spacing board. Therefore, it has been thought of solving the problem of reduction of heat dissipation of the vehicle electronic control device derived from improvement of the burglar resistant property by utilizing the opening of the spacing board.

Specifically, the straddle-type vehicle further includes the spacing board, the spacing board is disposed further below than the seat portion and further above than the vehicle electronic control device in the up-down direction of the vehicle, and an opening for the seat hook to pass is formed in the spacing board. In addition, the opening is located further above than the upper edge of the vehicle electronic control device and above the seat locking device, and is overlapped with the seat locking device in a top view of the vehicle. Thereby, in the condition that the upper edge of the vehicle electronic control device is disposed in a state of being located further above than the upper wall portion of the battery unit, the vehicle electronic control device accesses the opening, and therefore, heat energy of the vehicle electronic control device is released to a space above the spacing board via the opening.

So, in a state that the seat portion is closed, heat energy of the vehicle electronic control device is released to the space above the spacing board and a space below the seat portion via the opening. Specifically, the previous problem that the heat dissipation space above the vehicle electronic control device becomes small due to preventing stealing or trick to the seat locking device may be solved by utilizing the spaces formed above the spacing board and below the seat portion to expand the heat dissipation space. That is, in the condition that the upper edge of the vehicle electronic control device is disposed in a state of being located further above than at least a part of the seat locking device, even if the heat dissipation space above the vehicle electronic control device becomes small, the heat dissipation space above the vehicle electronic control device may be complemented by utilizing the spaces formed above the spacing board and below the seat portion, so as to solve the problem of reduction of heat dissipation of the vehicle electronic control device. The result is that the burglar resistant property is improved, furthermore, even if the heat dissipation space above the vehicle electronic control device is limited, the vehicle electronic control device can still realize heat dissipation with good efficiency.

Therefore, the present teaching adopts the following structure.

The purport of the straddle-type vehicle in a first embodiment is as follows: the straddle-type vehicle includes: left and right seat frames, which extend along the front-back direction of the vehicle; a storage box, which includes an open portion opened upwards, and is disposed between the left and right seat frames; a left rear cover portion, which is disposed further leftward in the left-right direction of the vehicle than the left seat frame and the storage box; a right rear cover portion, which is disposed further rightward in the left-right direction of the vehicle than the right seat frame and the storage box; a seat portion, which is capable of being opened or closed relative to the open portion of the storage box, and is provided with a seat hook disposed at the rear portion and extending downwards; a seat locking device, which is provided with a seat lock member for locking the seat hook and an unlocking operating member used for unlocking the seat lock member; a battery unit, which is disposed behind the storage box in the front-back direction of the vehicle; and a vehicle electronic control device, which is provided with a control circuit and a driving circuit, and disposed behind the battery unit, the driving circuit drives a driven device, and the heat generation quantity is greater than that of the control circuit; furthermore, the battery unit is disposed below the seat locking device, and overlaps with the seat locking device in a top view of the vehicle; the upper edge of the vehicle electronic control device is disposed in a state of protruding further above than the upper wall portion of the battery unit and being located further above than at least a part of the seat locking device.

According to the first embodiment, the straddle-type vehicle includes: the left and right seat frames, which extend along the front-back direction of the vehicle; the storage box, which includes the open portion opened upwards, and is disposed between the left and right seat frames; the left rear cover portion, which is disposed further leftward in the left-right direction of the vehicle than the left seat frame and the storage box; and the right rear cover portion, which is disposed further rightward in the left-right direction of the vehicle than the right seat frame and the storage box. According to the structure, an internal space of a vehicle body rear cover encircled by the storage box and the left and right rear cover portions is formed.

Moreover, the straddle-type vehicle includes: the seat portion, which may be opened or closed relative to the open portion of the storage box, and is provided with the seat hook disposed at the rear portion and extending downwards; and the seat locking device, which is provided with the seat lock member for locking the seat hook and the unlocking operating member used for unlocking the seat lock member. The straddle-type vehicle further includes: the battery unit, which is disposed behind the storage box in the front-back direction of the vehicle; and the vehicle electronic control device, which is provided with the control circuit and the driving circuit, and disposed behind the battery unit, wherein the driving circuit drives a driven device, and the heat generation quantity is greater than that of the control circuit. According to the structure, the vehicle electronic control device, the seat locking device and the battery box are disposed in the internal space of the vehicle body rear cover encircled by the storage box and the left and right rear cover portions.

Moreover, the battery unit is disposed below the seat locking device, and overlapped with the seat locking device in a top view of the vehicle; and the upper edge of the vehicle electronic control device is disposed in a state of protruding further above than the upper wall portion of the battery unit and being located further above than at least a part of the seat locking device.

According to the structure, the battery unit is disposed below the seat locking device in a manner of overlapping with the seat locking device in a top view of the vehicle, and the upper edge of the vehicle electronic control device disposed behind the battery unit is disposed by protruding further above than the upper wall portion of the battery unit in a state of being located further above than at least a part of the seat locking device. The result is that the seat locking device are shielded by the vehicle electronic control device and the battery unit from behind and below, and therefore, it is hard to access the seat locking device from the rear side or the lower side of the vehicle, so as to prevent stealing or trick to the seat locking device.

Moreover, the straddle-type vehicle further includes a spacing board, the spacing board is disposed further below than the seat portion and further above than the vehicle electronic control device in the up-down direction of the vehicle, and forms an opening for the seat hook to pass; and the opening is located further above than the upper edge of the vehicle electronic control device and above the seat locking device, and is overlapped with the seat locking device in a top view of the vehicle.

According to the structure, deterioration of attractiveness may be prevented by the spacing board. Moreover, the vehicle electronic control device is near the opening, and therefore, heat energy of the vehicle electronic control device is released to the space above the spacing board and the space below the seat portion via the opening.

The purport of the straddle-type vehicle in a second embodiment is as follows: in the up-down direction of the vehicle, the distance between the upper edge of the vehicle electronic control device and the upper edge of the battery unit is longer than the distance between the lower edge of the seat locking device and the upper edge of the battery unit.

According to the second embodiment, in the up-down direction of the vehicle, the distance between the upper edge of the vehicle electronic control device and the upper edge of the battery unit is longer than the distance between the lower edge of the seat locking device and the upper edge of the battery unit. Therefore, in a state that the seat portion is closed, even if in a condition that a person intends to access the seat locking device towards the upward front from positions behind or below the vehicle, especially from the lower rear side of the vehicle, it is hard to access the seat locking device illegitimately because at least a part of the seat locking device is shielded by the vehicle electronic control device, so as to prevent stealing or trick and the like to the seat locking device.

The purport of the straddle-type vehicle in a third embodiment is as follows: the distance between the left edge of the seat locking device and the left edge of the battery unit in the left-right direction of the vehicle and the distance between the right edge of the seat locking device and the right edge of the battery unit in the left-right direction of the vehicle are both longer than or equal to the distance between the lower edge of the seat locking device and the upper edge of the battery unit in the up-down direction of the vehicle.

According to the third embodiment, the distance between the left edge of the seat locking device and the left edge of the battery unit in the left-right direction of the vehicle and the distance between the right edge of the seat locking device and the right edge of the battery unit in the left-right direction of the vehicle are both longer than or equal to the distance between the lower edge of the seat locking device and the upper edge of the battery unit in the up-down direction of the vehicle. Therefore, in a state that the seat portion is closed, even if in a condition that a person intends to access the seat locking device towards the upper right side from positions behind or below the vehicle, especially from the lower left side of the battery unit in the left-right direction of the vehicle, it is hard to access the seat locking device because the distance between the left edge of the seat locking device and the left edge of the battery unit in the left-right direction of the vehicle is longer than or equal to the distance between the lower edge of the seat locking device and the upper edge of the battery unit in the up-down direction of the vehicle, so as to prevent stealing or trick and the like to the seat locking device. Moreover, even if in a condition that a person intends to access the seat locking device towards the left upper side from the lower right side of the battery unit in the left-right direction of the vehicle, it is hard to access the seat locking device because the distance between the right edge of the seat locking device and the right edge of the battery unit in the left-right direction of the vehicle is longer than or equal to the distance between the lower edge of the seat locking device and the upper edge of the battery unit in the up-down direction of the vehicle, so as to prevent stealing or trick and the like to the seat locking device.

The purport of the straddle-type vehicle in a fourth embodiment is as follows: the battery unit comprises a battery box for accommodating a battery, and the vehicle electronic control device is installed at the rear wall portion of the battery box.

According to the fourth embodiment, the battery unit includes the battery box for accommodating the battery, and the vehicle electronic control device is installed at the rear wall portion of the battery box. Therefore, because the battery unit includes the battery box, a larger area of the seat locking device may be shielded, and therefore, the protective function of the battery box to the seat locking device is better, so as to prevent stealing or trick and the like to the seat locking device. Moreover, the vehicle electronic control device may be easily fixed on the battery box of the battery unit at low cost.

The purport of the straddle-type vehicle in a fifth embodiment is as follows: the battery box is provided with a license plate bracket extending rearwards from the lower portion of the battery box.

According to the fifth embodiment, the battery box is provided with the license plate bracket extending rearwards from the lower portion of the battery box. Therefore, even if in a condition that a person intends to access the seat locking device towards the upper side from the lower side of the vehicle, it is hard to access the seat locking device because the license plate bracket is formed by extending rearwards from the lower portion of the battery box to block most part of a passage for accessing, so as to prevent stealing or trick and the like to the seat locking device.

The purport of the straddle-type vehicle in a sixth embodiment is as follows: in the rear view of the vehicle, the size of the vehicle electronic control device in the left-right direction of the vehicle is greater than the size of the seat locking device in the left-right direction of the vehicle, and is greater than the size of the battery in the left-right direction of the vehicle.

According to the sixth embodiment, in the rear view of the vehicle, the size of the vehicle electronic control device in the left-right direction of the vehicle is greater than the size of the seat locking device in the left-right direction of the vehicle, and is greater than the size of the battery in the left-right direction of the vehicle. Therefore, the size of the vehicle electronic control device in the left-right direction of the vehicle is greater than the sizes of the seat locking device and the battery in the left-right direction of the vehicle, and then it is hard to access the seat locking device from two sides of the vehicle electronic control device in the left-right direction of the vehicle or from the rear side of the vehicle electronic control device in the front-back direction of the vehicle, so as to prevent stealing or trick and the like to the seat locking device.

The purport of the straddle-type vehicle in a seventh embodiment is as follows: as for a portion higher than the upper edge of the battery box in the up-down direction of the vehicle in the vehicle electronic control device, the size of at least a part in the left-right direction of the vehicle is substantially the same as the size of the rear wall portion of the battery box in the left-right direction of the vehicle.

According to the seventh embodiment, as for the portion higher than the upper edge of the battery box in the up-down direction of the vehicle in the vehicle electronic control device, the size of at least a part in the left-right direction of the vehicle is substantially the same as the size of the rear wall portion of the battery box in the left-right direction of the vehicle. Therefore, the size of a space formed in front of the front side of the vehicle electronic control device and above the battery box may be ensured, and therefore, it is hard to access the seat locking device from two sides of the vehicle electronic control device in the left-right direction of the vehicle or the rear side of the vehicle electronic control device in the front-back direction of the vehicle, so as to prevent stealing or trick and the like to the seat locking device.

The purport of the straddle-type vehicle in an eighth embodiment is as follows: the upper edge of the vehicle electronic control device is disposed in a manner protruding further above than the upper wall portion of the battery unit and being located further above than at least a part of the unlocking operating member.

According to the eighth embodiment, the upper edge of the vehicle electronic control device is disposed in a manner protruding further above than the upper wall portion of the battery unit and being located further above than at least a part of the unlocking operating member. Therefore, at least a part of the unlocking operating member is shielded by the vehicle electronic control device. This results in that, in a state that the seat portion is closed, even if in a condition that a person intends to access the unlocking operating member of the seat locking device from positions behind or below the vehicle, especially from the rear side of the vehicle, it is hard to access the seat locking device illegitimately because the rear side of the unlocking operating member is shielded by the vehicle electronic control device, so as to prevent stealing or trick and the like to the seat locking device.

The purport of the straddle-type vehicle in a ninth embodiment is as follows: a cross member installed in the left and right seat frames is further disposed behind the storage box in the front-back direction of the vehicle, and the seat locking device is disposed on the cross member.

According to the ninth embodiment, the cross member installed in the left and right seat frames is further disposed behind the storage box in the front-back direction of the vehicle, and the seat locking device is provided on the cross member. Therefore, the seat locking device may be disposed on the cross member by being corresponding to the center position of the battery unit below, and therefore, it is hard to access the seat locking device from either the left side or the right side of the battery unit, so as to prevent stealing or trick and the like to the seat locking device.

The purport of the straddle-type vehicle in a tenth embodiment is as follows: when the seat portion is closed, a gap is formed at the boundary of the seat portion and the storage box, and a space above the spacing board communicates with the gap, so as to form a heat dissipation path.

According to the tenth embodiment, when the seat portion is closed, the gap is formed at the boundary of the seat portion and the storage box, and the space above the spacing board communicates with the gap, so as to form the heat dissipation path. Therefore, during running the vehicle, the running wind blown from the front during running is guided to the opening via the gap at the boundary of the seat portion and the storage box, and forms backward air flow above the opening, and therefore, heat and air below the opening are sucked to the upper side of the opening together and are discharged out of the vehicle along with the running wind. This results in that, the vehicle electronic control device is capable of dissipating heat with good efficiency.

### Brief description of the drawings

FIG. 1 is a left side view of a straddle-type vehicle 1 according to the present teaching;
FIG. 2 is a top view of the straddle-type vehicle 1 according to the present teaching;
FIG. 3 is a perspective view of the rear portion of the straddle-type vehicle 1 after a rear cover portion 43 is omitted;
FIG. 4(a) is a rear view of the rear portion of the straddle-type vehicle 1 in a state that the vehicle body cover 4 is omitted, (b) is a rear view of a seat locking device 12 represented by dash lines of (a), (c) is a left side view of the rear portion of the straddle-type vehicle 1 in a state that the vehicle body cover 4 is omitted, (d) is a left side view in a state that parts shielding the seat locking device 12 of (c) are omitted;
FIG. 5(a) is a perspective view of the rear portion of the straddle-type vehicle 1 in a state that the seat portion 6, the storage box 10 and the spacing board 15 in FIG. 3 are omitted, (b) is a perspective view when observing (a) from the left front, (c) is a left side view of (a), (d) is a top view of (a);
FIG. 6 is a rear view of the seat locking device 12;
FIG. 7(a) is a perspective view of the vehicle electronic control device 14, (b) is a perspective view of the vehicle electronic control device 14 in a state that an accommodating box 145 of (a) is omitted;
FIG. 8 is a rear view of the seat locking device 12, a part of the battery unit 13 and the vehicle electronic control device 14;
FIG. 9 is an exemplary diagram with a right triangle representing a length relationship between distance W31 (distance W32) and distance W2;
FIG. 10 is a rear view of the rear portion of the straddle-type vehicle 1 in a state that the seat portion of FIG. 4(a) is opened;
FIG. 11 is a left side view of the rear portion of the straddle-type vehicle 1 in a state that the seat portion of FIG. 4(b) is opened;
FIG. 12(a) is a top view of FIG. 10, (b) is a top view of the seat locking device 12 represented by dash lines of (a);
FIG. 13 is a section view of line III-III of FIG. 2;
FIG. 14 is an exemplary diagram when the running wind during running flows above an opening 151;
FIG. 15 is a section view of line II-II of FIG. 4(d); and
FIG. 16 is a schematic diagram representing the varying case of the arrangement position of the battery unit 13 and the vehicle electronic control device 14 of the straddle-type vehicle 1.

### Detailed Description

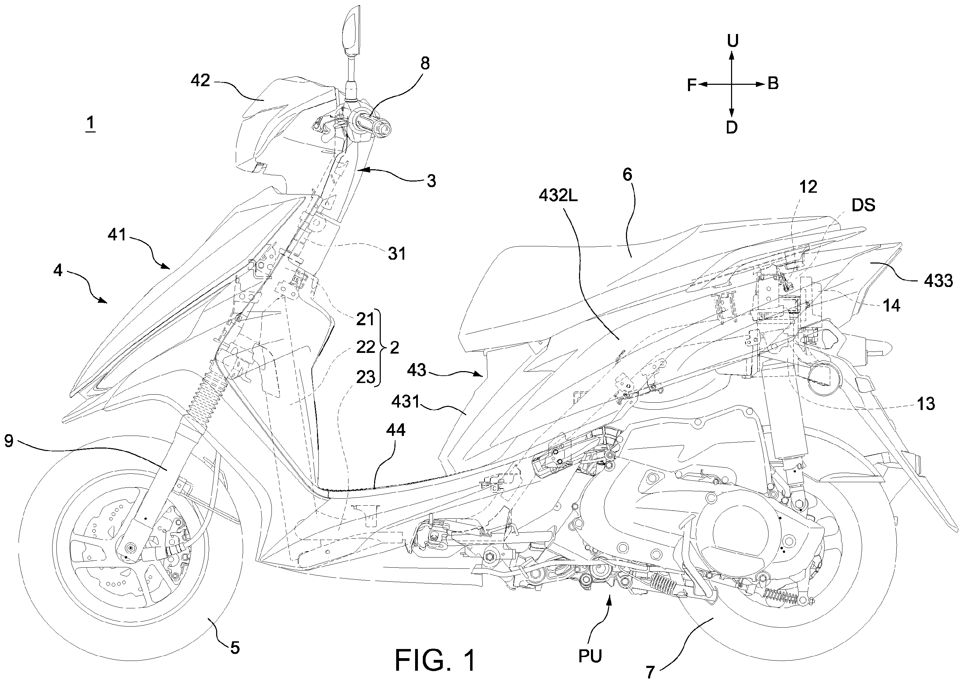

Detailed description is made to the straddle-type vehicle of the present teaching by referring to the embodiments of the accompanying drawings. As shown in FIG. 1, the straddle-type vehicle 1 is a scooter-type vehicle of a motorcycle, but is not limited to the scooter-type vehicle, and is also applicable to straddle-type vehicles except the scooter-type vehicle, such as four-wheeled cross country vehicles including electric vehicles, sport type motorcycles, lightweight motorcycles with pedals (moped) or all terrain vehicles (ATV). Moreover, it is not limited to two-wheeled vehicles, and may also be three-wheeled vehicles.

In the following descriptions, directions of front, rear, left, right, above and below respectively represent the front side of the vehicle, the rear side of the vehicle, the left side of the left-right direction of the vehicle, the right side of the left-right direction of the vehicle, the upward side in the up-down direction, and the downward side in the up-down direction observed from the angle of a rider riding on the straddle-type vehicle 1. That is, the directions represent the front side of the vehicle, the rear side of the vehicle, the left side of the left-right direction of the vehicle, the right side of the left-right direction of the vehicle, the upward side in the up-down direction, and the downward side in the up-down direction in the rear view of the vehicle.

Furthermore, character marks of "F", "B", "L", "R", "U" and "D" in the drawings respectively represent "front", "back", "left", "right", "up" and "down".

### <The whole vehicle>

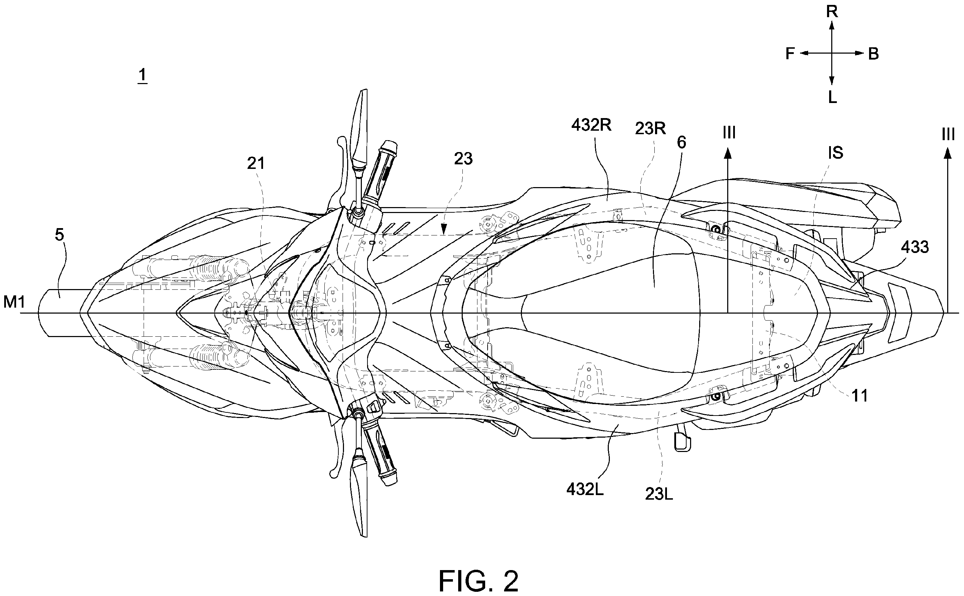

At first, the whole structure of the straddle-type vehicle 1 according to the embodiment is summarized with reference to FIG. 1 to FIG. 2. FIG. 1 is a left side view of a straddle-type vehicle 1; FIG. 2 is a top view of the straddle-type vehicle. In FIG. 1, the internal structure of the vehicle body frame 2 and a part of the rear portion of the vehicle is represented by dash lines, and in FIG. 2, the vehicle body frame 2 and the like are represented by dash lines.

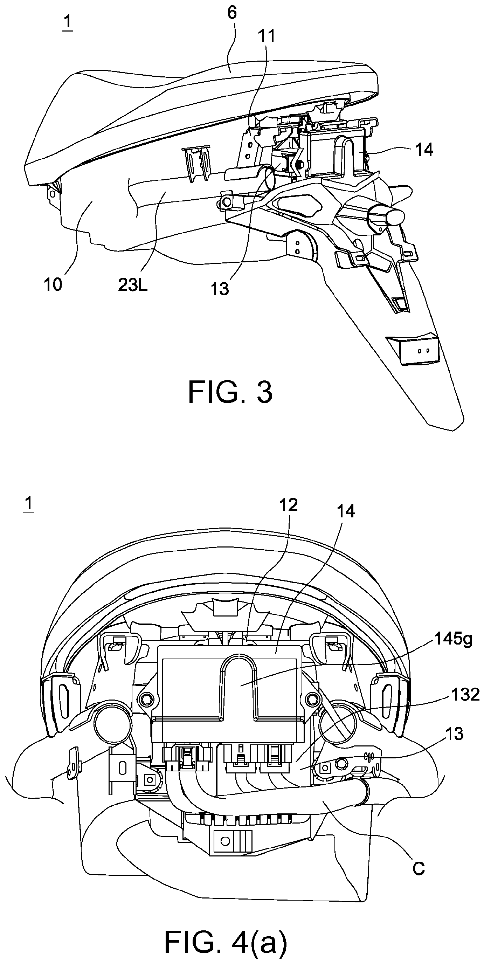

The straddle-type vehicle 1 described in FIG. 1 and FIG. 2 is the so-called "camber beam type" straddle-type vehicle. As shown in FIG. 1 and FIG. 2, the straddle-type vehicle 1 includes a vehicle body frame 2, a steering mechanism 3, a vehicle body cover 4, a front wheel 5, a seat portion 6, a rear wheel 7, a storage box 10 (referring to FIG. 3), a seat locking device 12, a battery unit 13, and a vehicle electronic control device 14.

The vehicle body frame 2 includes a head pipe 21, a front frame portion 22 and a rear frame portion 23. The head pipe 21 is inserted into and rotatably supports a steering shaft 31 of the steering mechanism 3, and extends downward obliquely toward the front. The front frame portion 22 is connected to the head pipe 21 by fusion welding and the like, extends downwards obliquely towards the rear side, and is located further backward than the front wheels 5. The rear frame portion 23 is connected to the lower portion of the front frame portion 22 by fusion welding, and extends rearwards, so as to support the seat portion 6 from the lower side. As shown in FIG. 2, the rear frame portion 23 includes a left seat frame 23L and a right seat frame 23R which extend in the front-back direction of the vehicle.

A handle 8 for the rider to operate is disposed at the upper portion of the steering mechanism 3. A front fork 9 is disposed at the lower portion of the steering mechanism 3. The front wheel 5 is rotatably supported at the lower portion of the steering mechanism 3 by being disposed at the lower end of the front fork 9. The front wheel 5 rotates in a manner of deviating leftward and rightward along the central line M1 (referring to FIG. 2) of the vehicle extending in the front-back direction relative to the center of the left-right direction of the vehicle when the rider operates the handle 8. The front fork 9 includes a suspension mechanism, and impact is absorbed by the stretching of the suspension mechanism. The front wheel 5 moves in the up-down direction along with the stretching of the suspension mechanism of the front fork 9.

As shown in FIG. 1, a power unit PU is disposed on the rear frame portion 23 of the vehicle body frame 2. A seat portion 6 is disposed above the power unit PU. A storage box 10 is disposed below the seat portion 6 and between a left rear cover portion 432L and a right rear cover portion 432R. As shown in FIGs. 1-3, the storage box 10 (FIG. 3) is supported by the left seat frame 23L and the right seat frame 23R, and the lateral side of the storage box 10 is covered by the left rear cover portion 432L and the right rear cover portion 432R. The storage box 10 is opened upwards, and is opened or closed by the seat portion 6. The seat portion 6 is opened or closed by backward rotation of the front end portion by taking a hinge (not shown in the drawing) as a center, and is locked by the seat locking device 12 when being closed. The locking state may be unlocked by unlocking operations of key operation and the like which are not shown in the drawings. The rider operates the steering mechanism 3 to drive the straddle-type vehicle 1 in a posture of riding on the riding seat portion of the seat portion 6 and placing feet on the upper surface of a footboard.

### <The whole vehicle body cover>

As shown in FIG. 1, the vehicle body cover 4 includes a front cover portion 41, a handle cover portion 42, a rear cover portion 43 and a footboard portion 44. A headlamp unit is disposed on the handle cover portion 42. Moreover, the handle cover portion 42 is disposed further above than the front cover portion 41, and is formed by encircling the handle 8.

As shown in FIG. 1, the rear cover portion 43 is disposed at the rear portion of the vehicle. The rear cover portion 43 is disposed at the periphery of the storage box 10 below the seat portion 6. The footboard portion 44 as a lower floor of a foot rest portion is disposed between the front cover portion 41 and the rear cover portion 43, for the rider to place the feet. The rear cover portion 43 includes: a front side rear cover portion 431, which extends backwards and upwards from the rear end of the footboard portion 44; a left rear cover portion 432L, which is located on the left of the storage box 10; a right rear cover portion 432R, which is located on the right of the storage box 10; and a rear side rear cover portion 433, which is located behind the storage box 10. The rear side rear cover portion 433, for example, may only be a cover member, also may be a rear light combination unit with a parking light, a tail light and an indicator light, and also may be a cover member including the rear light combination unit.

As shown in FIG. 2, the left edge of the rear side rear cover portion 433 is connected to the left rear cover portion 432L. The right edge of the rear side rear cover portion 433 is connected to the right rear cover portion 432R. As shown in FIG. 2 and FIG. 3, the left rear cover portion 432L is located on the left of the left seat frame 23L in the left-right direction of the vehicle, and the right rear cover portion 432R is located on the right of the right seat frame 23R in the left-right direction of the vehicle. The storage box 10 is disposed between the left seat frame 23L and the right seat frame 23R. An internal space IS of the vehicle body rear cover is formed by the front side rear cover portion 431, the left rear cover portion 432L, the right rear cover portion 432R and the rear side rear cover portion 433. Moreover, the left seat frame 23L, the right seat frame 23R, the storage box 10 and the like are located in the internal space IS of the vehicle body rear cover.

Moreover, as shown in FIG. 1, the footboard portion 44 extends backwards substantially horizontally from a connecting portion with the lower end of the front cover portion 41, and is connected with the rear cover portion 43. Thereby, in a top view of the vehicle, a feet rest space which is opened in the left-right direction of the vehicle is formed between the front cover portion 41 and the rear cover portion 43 and above the footboard portion 44. Moreover, the shape of the feet rest portion is not limited to the structure of the footboard portion 44 of the lower floor.

### <The internal space of the vehicle body rear cover>

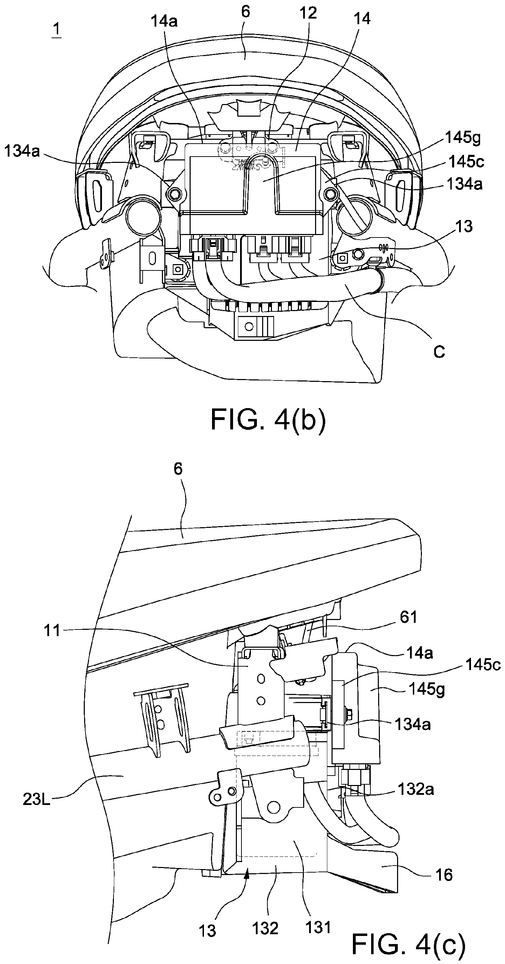

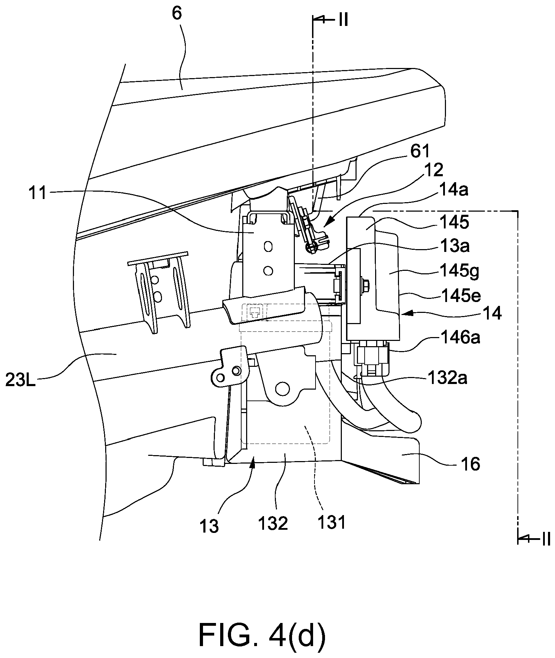

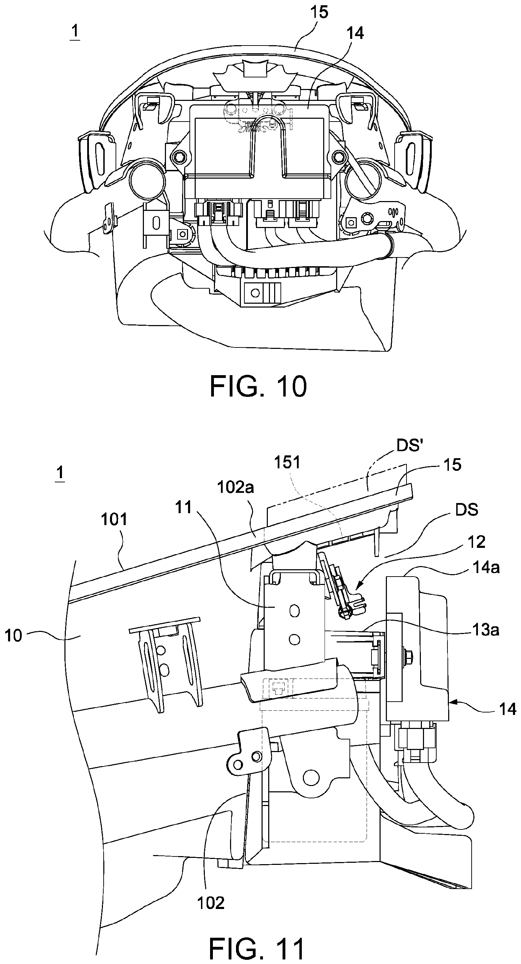

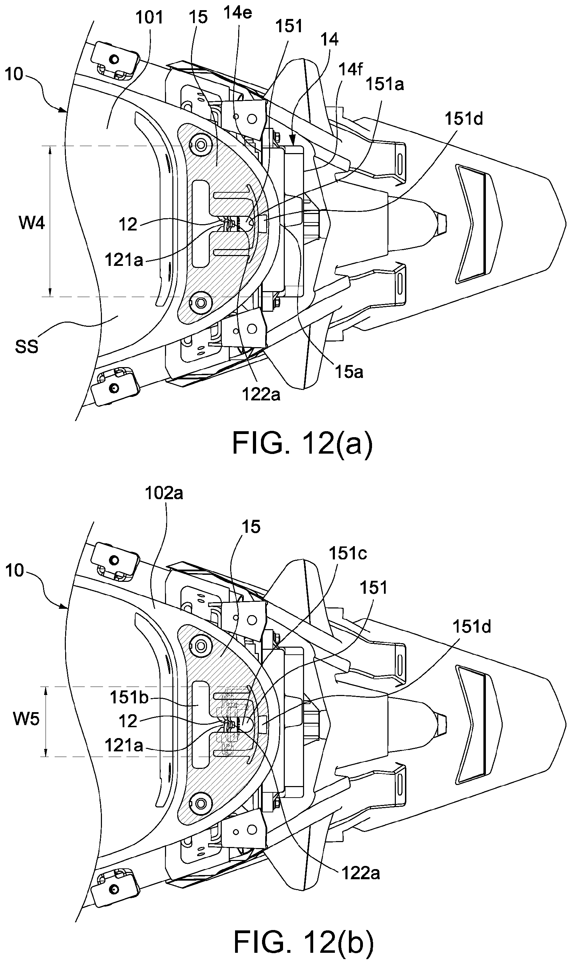

FIG. 3 is a perspective view of the rear portion of the straddle-type vehicle 1 after a rear cover portion 43 is omitted. As shown in FIG. 3, the storage box 10 is located between the left seat frame 23L and the right seat frame 23R. In a state that the seat portion 6 is closed, the seat portion 6 is located above the storage box 10. The storage box 10 includes an open portion 101 opened upwards (referring to FIG. 11 and FIG. 12(a)). A storage space SS (referring to 12(a)) which is capable of accommodating relatively large luggage such as a safety helmet is formed in the storage box 10. Luggage is put into or taken out from the storage space SS (referring to 12(a)) via the open portion 101. A seat hook 61 extending downwards is disposed at the rear portion of the seat portion 6 (referring to FIG. 4(c) and FIG. 4(d)). The seat hook 61 is locked by the seat locking device 12, so as to protect luggage in the storage space SS.

As shown in FIG. 2 and FIG. 3, a cross member 11 is further disposed behind the left seat frame 23L and the right seat frame 23R. The cross member 11 is disposed behind the storage box 10 in a manner of crossing the left seat frame 23L and the right seat frame 23R, and connects the left seat frame 23L with the right seat frame 23R. The cross member 11 may form a whole body with the left seat frame 23L and the right seat frame 23R. Disposition of the cross member 11 may be omitted, while the rear portions of the left seat frame 23L and the right seat frame 23R are connected with each other. Moreover, the cross member 11 may be continuously formed from the left seat frame 23L to the right seat frame 23R in the left-right direction of the vehicle, and also, the cross member 11 may form a left cross member and a right cross member in a manner of extending from the rear portions of the left seat frame 23L and the right seat frame 23R to the central line M1 of the vehicle without being connected (referring to FIG. 2). The cross member 11, for example, is fixed on the left seat frame 23L and the right seat frame 23R by fusion welding. The fixing method of the cross member 11 and the seat frames is not limited to fusion welding, and other manners of fixing with bolts and the like may also be utilized.

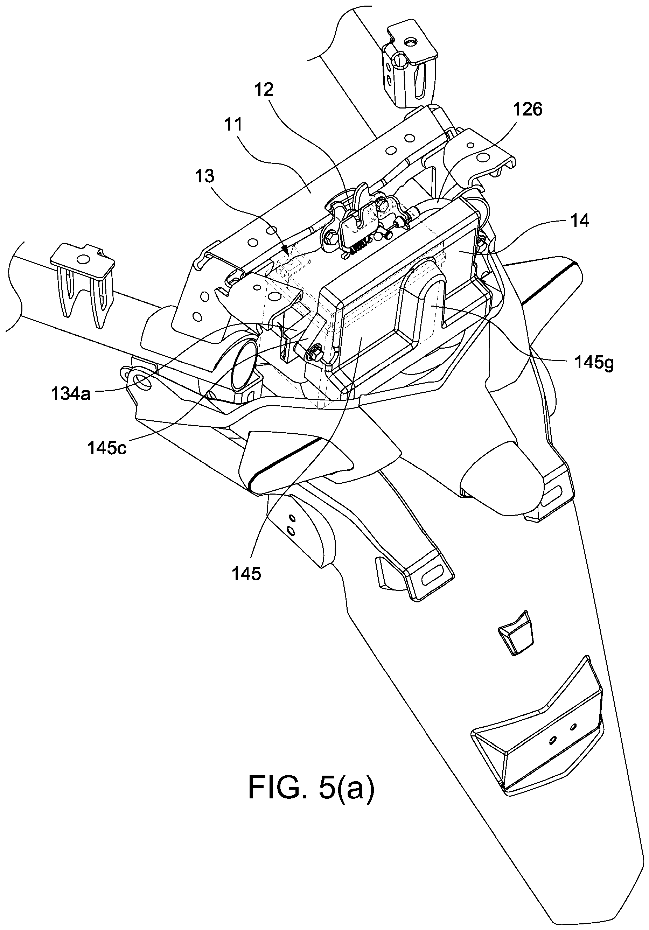

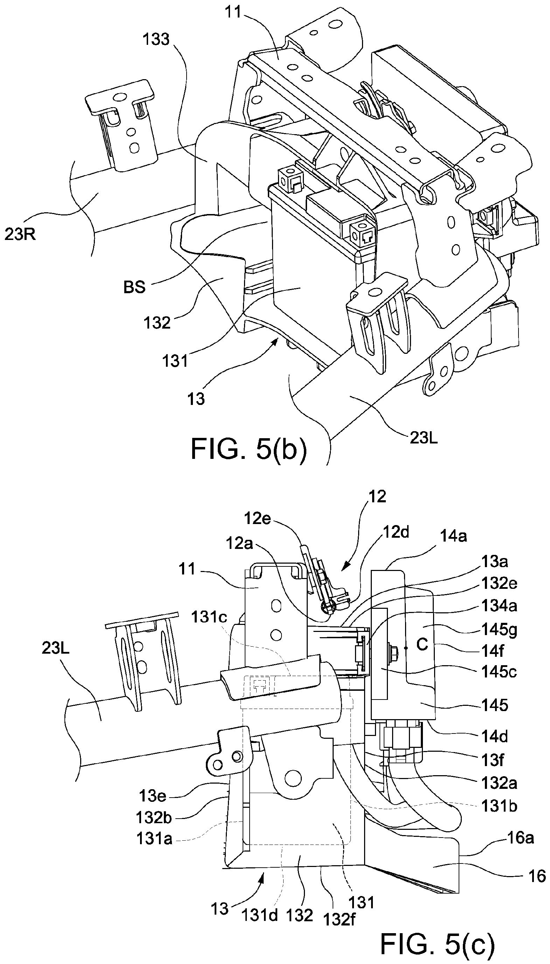

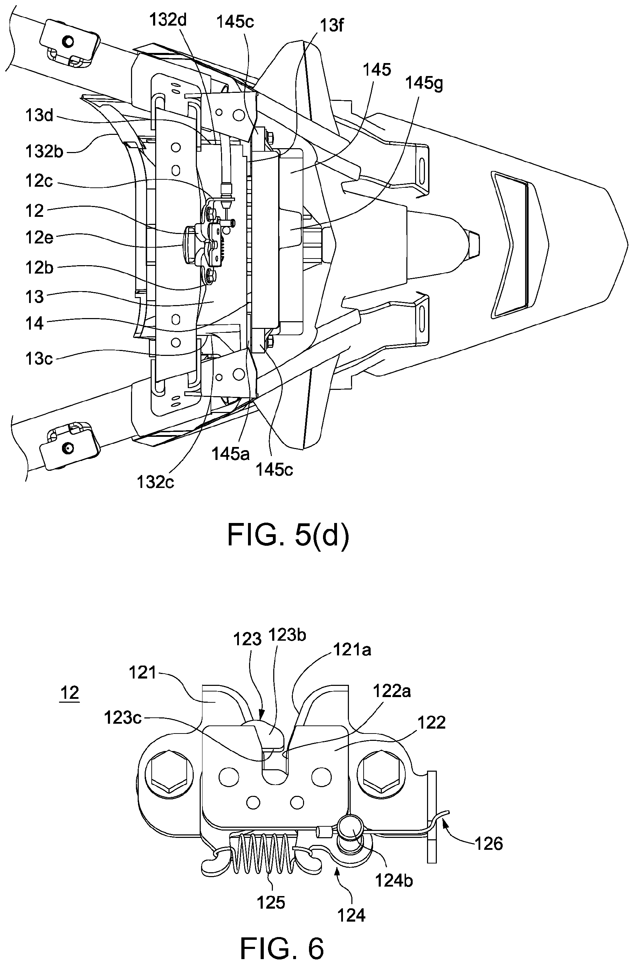

FIG. 4(a) is a rear view of the rear portion of the straddle-type vehicle 1 in a state that the vehicle body cover 4 is omitted, FIG. 4(b) is a rear view of a seat locking device 12 represented by dash lines of FIG. 4(a), FIG. 4(c) is a left side view of the rear portion of the straddle-type vehicle 1 in a state that the vehicle body cover 4 is omitted, FIG. 4(d) is a left side view in a state that parts shielding the seat locking device 12 of FIG. 4(c) are omitted; FIG. 5(a) is a perspective view of the rear portion of the straddle-type vehicle 1 in a state that the seat portion 6, the storage box 10 and the spacing board 15 in FIG. 3 are omitted, FIG. 5(b) is a perspective view when observing FIG. 5(a) from the left front, FIG. 5(c) is a left side view of FIG. 5(a), FIG. 5(d) is a top view of FIG. 5(a).

As shown in FIG. 3, FIG. 4(a), FIG. 4(b), FIG. 4(c) and FIG. 4(d), a seat locking device 12 is disposed behind the storage box 10. The seat locking device 12 is disposed on the cross member 11. In the embodiment, the seat locking device 12 is disposed on the cross member 11 by fastening members such as bolts. However, as long as the seat locking device 12 is fixed on the cross member 11, any fastening manner may be adopted. Moreover, in a condition that the cross member 11 forms the left cross member and the right cross member which are not connected in tail ends, the seat locking device 12 may also be set in a manner that the left side and the right side are respectively fixed at the tail ends of the left cross member and the right cross member. In a condition that the cross member 11 is not provided, the seat locking device 12 may be disposed at the rear portions of the left seat frame 23L and the right seat frame 23R or other parts.

### <The seat locking device>

FIG. 6 is a rear view of the seat locking device 12. As shown in FIG. 5(a) and FIG. 6, the seat locking device 12 includes: a base plate 121, which is fixed on the cross member 11; and an auxiliary plate 122, which is parallelly opposite to the base plate 121 by being spaced in the front-back direction of the vehicle. As shown in the drawing, the seat locking device 12 further includes: a seat lock member 123, which is capable of rotating relative to the base plate 121, and is used for locking the seat hook 61 (referring to FIG. 4(c) and FIG. 4(d)); a stopper plate 124, which is used for stopping the rotation of the seat lock member 123; and an unlocking operating member 126, which is used for unlocking the seat lock member 123.

As shown in FIG. 6, a main guide slot 121a for guiding the seat hook 61 is formed in the base plate 121. Similarly, an auxiliary guide slot 122a for guiding the seat hook 61 is formed in the auxiliary plate 122. The main guide slot 121a and the auxiliary guide slot 122a are both opened upwards, and are overlapped with each other by observing from the thickness direction of the seat lock member 123.

As shown in FIG. 6, the seat lock member 123 includes a lock member portion 123b for locking the seat hook 61. A retaining slot 123c for retaining the C shape of the seat hook 61 is formed in the lock member portion 123b. The seat lock member 123 is capable of rotating between a locking position for locking the seat hook 61 with the locking part portion 123b of the seat lock member 123 and an unlocking position for unlocking the locking of the seat hook 61.

As shown in FIG. 6, the seat locking device 12 further includes an extension spring 125. The extension spring 125 is mounted on the seat lock member 123 and the stopper plate 124. In a state that the seat lock member 123 is located in the locking position, the extension spring 125 is stretched to the extension direction, so as to generate elastic deformation. Therefore, in a state that the seat lock member 123 is located in the locking position, the seat lock member 123 is stretched to the direction of the unlocking position by the extension spring 125.

In a state that the seat lock member 123 is located in the unlocking position, the retaining slot 123c of the lock member portion 123b is opened upwards. In the state, if the rear portion of the seat portion 6 drops down (if the seat portion 6 is disposed in a closed position), the seat lock member 123 is pressed down by the seat hook 61. Thereby, the seat lock member 123 rotates to the meshing direction, and the meshing portion (not shown in the drawing) of the seat lock member 123 is meshed with the meshed portion (not shown in the drawing) of the stopper plate 124. Therefore, the seat lock member 123 is disposed on the locking position, and the seat hook 61 is locked by the seat lock member 123.

The unlocking operating member 126 is formed in a manner of enabling the stopper plate 124 to rotate towards a meshing releasing direction. In the embodiment, the unlocking operating member 126 is an unlocking cable. A cable mounting portion 124b used for arranging the unlocking operating member 126 is disposed on the stopper plate 124. As shown in FIG. 6, the cable mounting portion 124b is disposed on the right side of the stopper plate 124. The unlocking operating member 126 is connected to the cable mounting portion 124b of the stopper plate 124 of the seat locking device 12 from the right side. Wire arrangement of the unlocking operating member 126 is towards the front of the vehicle body, and the front end of the unlocking operating member 126 is connected to an operating rod (not shown in the drawing). By rotating the operating rod, the unlocking operating member 126 is stretched to the right of the drawing, so that the stopper plate 124 rotates towards the meshing unlocking direction, and then the seat locking device 12 is in an unlocked state, so as to release the seat hook 61 to open the seat portion 6.

In the embodiment, the straddle-type vehicle 1 is formed in a manner that the operating rod is operated on the right side of the vehicle, and the unlocking operating member 126 is disposed on the right side of the seat locking device 12. It may be also disposed on the opposite side.

In the embodiment, the unlocking operating member 126 is a mechanical device, and is formed in a structure that operation of the rider is transferred to the stopper plate 124 by transfer members such as the unlocking cable or a wire. Moreover, the unlocking operating member 126 also may be an electric device with an electromagnetic actuator and a control device, wherein the electromagnetic actuator generates a power enabling the stopper plate 124 to rotate towards the releasing direction, and the control device controls the electromagnetic actuator by complying with the operation of the rider.

### <The battery unit>

As shown in FIG. 3 and FIG. 4, the battery unit 13 is disposed behind the storage box 10 in the front-back direction of the vehicle. The battery unit 13 is located between the rear portion of the left seat frame 23L and the rear portion of the right seat frame 23R. The battery unit 13 is located below the cross member 11. As shown in FIG. 4(c), FIG. 4(d), and FIG. 5(b), the battery unit 13 includes a battery 131, and a battery box 132 for accommodating the battery 131. As shown in FIG. 5(b), the battery box 132 is disposed in a manner that the upper portion is fixed on the cross member 11. In a condition that the cross member 11 forms the left cross member and the right cross member which are not connected in tail ends, the battery box 132 may be also disposed in a manner that the upper portion is fixed on the left cross member and the right cross member respectively. In a condition that the cross member 11 is not provided, the battery box 132 may be disposed in a manner that the upper portion is fixed on the left seat frame 23L or/and the right seat frame 23R.

As shown in FIG. 5(b), the battery box 132 includes an open portion 133 which is open forwards and a battery storage space BS for accommodating the battery 131. The open portion 133 of the battery box 132 is opposite to the storage box 10. The open portion 133 of the battery box 132 may be also open towards other directions. The battery box 132 may also form a box shape in a manner of encircling the whole battery 131. The battery box 132 may also form a box shape capable of supporting the battery 131. The battery box 132 may be of any form as long as it is capable of accommodating the battery 131 in a manner of being capable of supporting the battery 131.

### <The vehicle electronic control device>

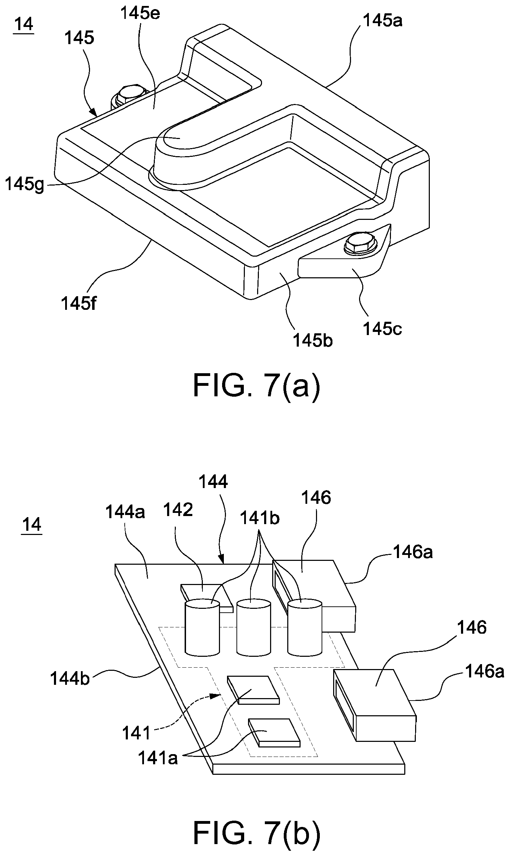

FIG. 7(a) is a perspective view of the vehicle electronic control device 14, FIG. 7(b) is a perspective view of the vehicle electronic control device 14 in a state that an accommodating box 145 of (a) is omitted. As shown in FIG. 7(a) and FIG. 7(b), the vehicle electronic control device 14 includes a substrate 144 and an accommodating box 145 for accommodating the substrate 144. The substrate 144 includes: a first mounting surface 144a, which is used for mounting a driving circuit 141, a control circuit 142 and a connector 146; and a second mounting surface 144b, which is the back surface of the first mounting surface 144a, and used for mounting multiple electronic parts (not shown in the drawings). The substrate 144 is typically a circuit substrate such as a glass epoxy substrate. The accommodating box 145 is typically made from resin.

The driving circuit 141 is provided with multiple heat generating elements 141a and multiple tall components 141b, and is connected with the control circuit 142 by the electric harnesses formed on the substrate 144 which are not shown in the drawing. Furthermore, the driving circuit 141 also includes constitution parts besides the heat generating elements 141a and the tall components 141b, which are omitted in the drawings.

The heat generating elements 141a are formed by switching elements which are mounted in a specific area of the first mounting surface 144a of the substrate 144 by welding and the like and are typically FET and the like, and generates heat by executing the switching action when a control signal coming from the control circuit 142 drives a driven device. Moreover, in a condition that the motor is taken as a power generator in the action to charge the battery unit 13 via the heat generating elements 141a, the heat generating elements 141a also generate heat. In such a condition, the heat generation quantity of the heat generating elements 141a is remarkably higher than the heat generation quantity generated during executing the switching action, and therefore, sufficient consideration is needed for the heat dissipation of the vehicle electronic control device 14.

The tall components 141b are typically formed by capacitors such as an electrolytic capacitor, and are disposed further towards the side of the control circuit 142 than the heat generating elements 141a on the first mounting surface 144a of the substrate 144.

The control circuit 142 is provided with a calculating processing device which is mounted in a specific area of the first mounting surface 144a of the substrate 144 by welding and the like and is typically an electronic control unit (ECU). The control circuit 142 controls the switching action and the like of the heat generating elements 141a. The control circuit 142 is the one with relatively small heat generation quantity in action in comparison with the heat generating elements 141a. Moreover, the control circuit 142 also includes constitution parts besides the calculating processing device, which are omitted in the drawings.

As shown in FIG. 7(a) and FIG. 7(b), the accommodating box 145 includes: an upper wall portion 145e, which is located on the side of the first mounting surface 144a of the substrate 144; and a lower wall portion 145f, which is located on the side of the second mounting surface 144b of the substrate 144. The accommodating box 145 is formed in a manner that one end is of a bag shape with the open portion 145a opened outwards, and a part of the connector 146 protrudes outwards from the open portion 145a.

As shown in FIG. 4(d), the vehicle electronic control device 14 is disposed in a manner that the upper wall portion 145e of the accommodating box 145 faces backwards, and an embedding portion 146a of the connector 146 faces downwards. However, the upper wall portion 145e of the accommodating box 145 may also face forwards, and the embedding portion 146a of the connector 146 may also face upwards, leftwards or rightwards. The vehicle electronic control device 14 may be disposed by facing any direction as long as the electric harnesses are connected to the connector 146.

As shown in FIG. 7(a), the upper wall portion 145e of the accommodating box 145 includes a protruding wall portion 145g, and the protruding wall portion 145g presents an appearance shape like the appearance shape of the tall components 141b, and accommodates the tall components 141b inside. In the driving circuit 141, the tall components 141b are disposed on the substrate 144 in a manner of being further towards the side of the control circuit 142 than the heat generating elements 141a, and therefore, the protruding wall portion 145g is also formed on the side closer to the control circuit 142. As shown in FIG. 4(a) and FIG. 4(b), the vehicle electronic control device 14 is disposed behind the battery unit 13 in a manner that the protruding wall portion 145g deviates towards one side of the central line M1 (referring to FIG. 2) of the vehicle in the left-right direction of the vehicle. However, the vehicle electronic control device 14 may also be disposed behind the battery unit in a manner that the protruding wall portion 145g overlaps with the central line M1 of the vehicle.

As shown in FIG. 7(b), the connector 146 includes a recess for embedding a connector C (referring to FIG. 4(a) and FIG. 4(b)) of an object side, namely the embedding portion 146a, and a connecting terminal (not shown in the drawing). The connector 146 is welded on the substrate 144 by the connecting terminal, and is mounted on the first mounting surface 144a of the substrate 144. One end of the connecting terminal is inserted and welded to a through hole which is formed in the substrate 144 and omitted in the drawing, and the other end is electrically connected to the terminal C of the connector at the object side.

### <The position relationship between the seat locking device and the battery unit>

As shown in FIG. 5(c), in the front-back direction of the vehicle, the front edge 13e of the battery unit 13 is located further forward than the front edge 12e of the seat locking device 12, and the rear edge 13f of the battery unit 13 is located further backward than the rear edge 12d of the seat locking device 12.

As shown in FIG. 5(d), in a top view of the vehicle, the battery unit 13 is disposed below the seat locking device 12 and overlaps with the seat locking device 12. In a top view of the vehicle, the battery unit 13 is disposed in a manner of overlapping with the whole seat locking device 12. As shown in FIG. 5(d), in a top view of the vehicle, in the left-right direction of the vehicle, the left edge 13c of the battery unit 13 is located further leftward than the left edge 12b of the seat locking device 12. The right edge 13d of the battery unit 13 is located further rightward than the right edge 12c of the seat locking device 12.

As shown in FIG. 5(c), in a top view of the vehicle, in the front-back direction of the vehicle, the front edge 132b of the battery box 132 is located further forward than the front edge 12e of the seat locking device 12. In the embodiment, the front edge 132b of the battery box 132 is located further forward than the cross member 11 and the seat locking device 12 disposed on the cross member 11. However, the front edge 132b of the battery box 132 may also be not located further forward than the cross member 11, and may be located in a position substantially the same as that of the cross member 11 in the front-back direction of the vehicle. Moreover, as shown in FIG. 5(c), in the front-back direction of the vehicle, the rear wall portion 132a of the battery box 132 is located further backward than the rear edge 12d of the seat locking device 12. That is, in the embodiment, the seat locking device 12 is disposed between the front edge 132b and the rear wall portion 132a of the battery box 132 of the battery unit 13. Moreover, as shown in FIG. 5(d), in a top view of the vehicle, in the left-right direction of the vehicle, the seat locking device 12 is disposed between the left edge 132c and the right edge 132d of the battery box 132.

As shown in FIG. 5(c), in the front-back direction of the vehicle, the front edge 131a of the battery 131 is located further forward than the seat locking device 12. Moreover, in the embodiment, in the front-back direction of the vehicle, the rear edge 131b of the battery 131 is located in a position substantially the same as that of the rear edge 12d of the seat locking device 12. However, the rear edge 131b of the battery 131 may be located further backward than the rear edge 12d of the seat locking device 12 and also may be located further forward than the rear edge 12d of the seat locking device 12.

### <The position relationship between the seat locking device and the vehicle electronic control device>

Moreover, as shown in FIG. 4(b) and FIG. 4(d), the upper edge 14a of the vehicle electronic control device 14 is disposed in a state of being located further above than at least a part of the seat locking device 12. The upper edge 14a of the vehicle electronic control device 14 is disposed in a state of being located further above than the lower edge 12a of the seat locking device 12. Preferably, the upper edge 14a is disposed in a state of being located further above than at least a part of the unlocking operating member 126 of the seat locking device 12. Optimally, the upper edge 14a is disposed in a state of being located further above than the overall seat lock member 123 of the seat locking device 12. Further optimally, the upper edge 14a is disposed in a state of being located further above than the overall seat locking device 12.

As shown in FIG. 4(d), in the rear view of the vehicle, in the up-down direction of the vehicle, the vehicle electronic control device 14 is disposed in a manner of overlapping with the seat locking device 12. As shown in FIG. 4(d), in the rear view of the vehicle, in the up-down direction of the vehicle, the vehicle electronic control device 14 is disposed in a manner of overlapping with the lower portion of the seat locking device 12. As shown in FIG. 4(d), in the rear view of the vehicle, in the up-down direction of the vehicle, the vehicle electronic control device 14 is disposed in a manner of overlapping with the stopper plate 124 of the seat locking device 12.

Moreover, the upper edge 14a of the vehicle electronic control device 14 may also be disposed further above than at least a part of the extension spring 125, and may also be disposed further above than the entire extension spring 125. Moreover, the upper edge 14a of the vehicle electronic control device 14 may also be disposed further above than at least a part of the cable mounting portion 124b, and may also be disposed further above than the entire cable mounting portion 124b. Moreover, the upper edge 14a of the vehicle electronic control device 14 may also be disposed further above than at least a part of the lock member portion 123b, and may also be disposed further above than the entire lock member portion 123b.

### <The position relationship between the battery unit and the vehicle electronic control device>

As shown in FIG. 4(d), the vehicle electronic control device 14 is disposed behind the battery unit 13. In the embodiment, the vehicle electronic control device 14 is disposed on the rear wall portion 132a of the battery box 132. As shown in FIG. 7(a), a stay 145c protruding outward from the side wall portion 145b of the accommodating box 145 is integrally formed with the accommodating box 145 on the side wall portion 145b of the accommodating box 145. Moreover, as shown in FIG. 4(b) and FIG. 4(c), a stay 134a which extends along the left-right direction of the vehicle is formed corresponding to the stay 145c of the accommodating box 145 of the vehicle electronic control device 14 on the rear wall portion 132a of the battery box 132. In the embodiment, the vehicle electronic control device 14 is mounted and fixed on the rear wall portion 132a of the battery box 132 by fastening the stay 145c of the vehicle electronic control device 14 on the stay 134a of the battery unit 13 with fastening members such as bolts.

However, the vehicle electronic control device 14 may also be disposed behind the battery unit 13 in a manner of being fixed on other parts. The vehicle electronic control device 14 may also be disposed in a manner of abutting against the rear portion of the battery unit 13. The vehicle electronic control device 14 may also be disposed in a manner of abutting the upper wall portion 145e or the lower wall portion 145f of the accommodating box 145 to the rear portion of the battery unit 13, and may also be disposed in a manner of abutting a part of the vehicle electronic control device 14 to the rear portion of the battery unit 13. The vehicle electronic control device 14 may be disposed at the rear portion of the battery unit 13 without gaps, and may also be disposed at the rear portion of the battery unit 13 with gaps.

Moreover, as shown in FIG. 4(a) and FIG. 4(b), in the embodiment, the vehicle electronic control device 14 is disposed in a manner of overlapping with the battery unit 13 in the up-down direction of the vehicle in the rear view of the vehicle. Moreover, as shown in FIG. 4(a), the vehicle electronic control device 14 is disposed in a manner of overlapping with the battery box 132 in the up-down direction of the vehicle in the rear view of the vehicle.

As shown in FIG. 5(c), in the side view of the vehicle, in the up-down direction of the vehicle, the upper edge 14a of the vehicle electronic control device 14 is disposed in a manner of protruding further above than the upper wall portion 13a of the battery unit 13. Moreover, the lower edge 14d of the vehicle electronic control device 14 is located further below than the upper wall portion 13a (the upper edge) of the battery unit 13 and further above than the lower wall portion (lower edge) of the battery unit 13. Moreover, the lower edge 14d of the vehicle electronic control device 14 is located further below than the upper edge 132e of the battery box 132 and further above than the lower edge 132f of the battery box 132.

In the embodiment, as shown in FIG. 5(c), the center position C of the accommodating box 145 of the vehicle electronic control device 14 in the up-down direction of the vehicle is located further below than the upper wall portion 13a of the battery unit 13. However, the center position C may also be located at a height the same as that of the upper wall portion 13a of the battery unit 13, and may also be located further above than the upper wall portion 13a of the battery unit 13.

Moreover, as shown in FIG. 5(c), in the side view of the vehicle, in the up-down direction of the vehicle, the upper edge 14a of the vehicle electronic control device 14 is located further above than the upper edge 131c of the battery 131. The lower edge 14d of the vehicle electronic control device 14 is located further below than the upper edge 131c of the battery 131 and further above than the lower edge 131d of the battery 131. However, the lower edge 14d of the vehicle electronic control device 14 may also be located further above than the upper edge 131c of the battery 131. Moreover, in the embodiment, as shown in FIG. 5(c), the center position C of the accommodating box 145 of the vehicle electronic control device 14 in the up-down direction of the vehicle is located further above than the upper edge 131c of the battery 131. However, the center position C may also be located at a height the same as that of the upper edge 131c of the battery 131, and may also be located further below than the upper edge 131c of the battery 131.

As shown in FIG. 5(d), in a top view of the vehicle, in the front-back direction of the vehicle, the vehicle electronic control device 14 is disposed to be adjacent to the battery unit 13. The rear edge 13f of the batter unit 13 is disposed in a manner of being opposite to the front edge 14e of the vehicle electronic control device 14. In the embodiment, as shown in FIG. 5(d), in a top view of the vehicle, the vehicle electronic control device 14 does not overlap with the battery unit 13. However, the vehicle electronic control device 14 may be overlapped with a part of the battery unit 13.

### <The position relationship among the seat locking device, the battery unit and the vehicle electronic control device>

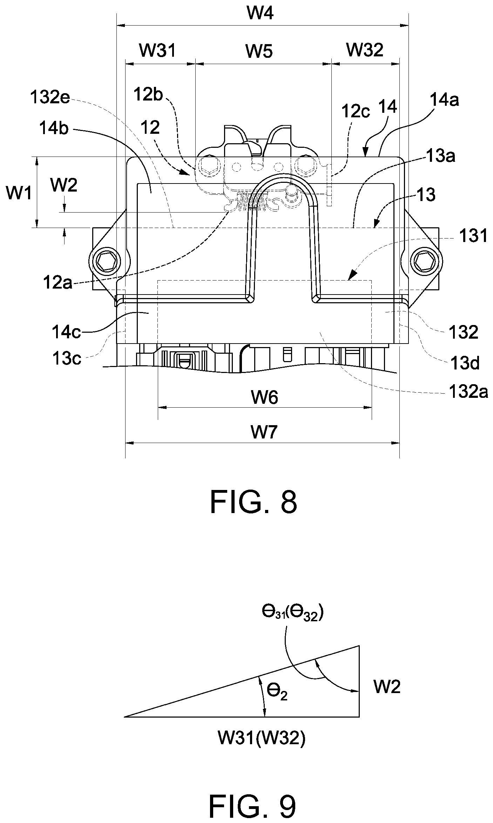

FIG. 8 is a rear view of the seat locking device 12, a part of the battery unit 13 and the vehicle electronic control device 14. Furthermore, in FIG. 8, portions, shielded by the vehicle electronic control device 14, of the seat locking device 12 and the battery unit 13 are represented by dash lines.

As shown in FIG. 8, in the rear view of the vehicle, in the up-down direction of the vehicle, the distance W1 between the upper edge 14a of the vehicle electronic control device 14 and upper wall portion 13a of the battery unit 13 is greater than the distance W2 between the lower edge 12a of the seat locking device 12 and the upper wall portion 13a of the battery unit 13. That is, it has the relationship of W1 > W2, preferably, the distance W1 is longer than 1.5 times of the distance W2, namely, is the relationship of W1 > 1.5 × W2, optimally, the distance W1 is longer than 2 times of the distance W2, namely, is the relationship of W1 > 2 × W2.

As shown in FIG. 8, in the rear view of the vehicle, the distance W31 between the left edge 12b of the seat locking device 12 and the left edge 13c (except the stay 134a, it is the same in the following) of the battery unit 13 in the left-right direction of the vehicle is longer than or equal to the distance W2 between the lower edge 12a of the seat locking device 12 and the upper wall portion 13a of the battery unit 13 in the up-down direction of the vehicle. That is, it has the relationship of W31 ≥ W2, preferably, is the relationship of W31 > W2. As shown in FIG. 8, in the rear view of the vehicle, the distance W32 between the right edge 12c of the seat locking device 12 and the right edge 13d (except the stay 134a, it is the same in the following) of the battery unit 13 in the left-right direction of the vehicle is longer than or equal to the distance W2 between the lower edge 12a of the seat locking device 12 and the upper wall portion 13a of the battery unit 13 in the up-down direction of the vehicle. That is, it has the relationship of W32 ≥ W2, preferably, is the relationship of W32 > W2.

FIG. 9 is an exemplary diagram with a right triangle representing a length relationship between the distance W31 (distance W32) and the distance W2. As shown in FIG. 9, in a condition that the distance W31 (the distance W32) and the distance W2 are respectively set as two edges of a right angle, the opposite angle of the distance W31 (distance W32) is θ31 (θ32), and the opposite angle of the distance W2 is θ2. The angle θ31 (θ32) is larger than or equal to the angle θ2. That is, it has the relationship of θ31 (θ32) ≥ θ2, preferably, is the relationship of θ31 (θ32) > θ2, optimally, the angle θ31 (θ32) is larger than 1.5 times of the angle θ2, namely, is the relationship of θ31 (θ32) > 1.5 × θ2, further optimally, the angle θ31 (θ32) is larger than 2 times of the angle θ2, namely, is the relationship of θ31 (θ32) > 2 × θ2.

As shown in FIG. 8, in the rear view of the vehicle, the size W4 (except the stay 145c, it is the same in the following) of the vehicle electronic control device 14 in the left-right direction of the vehicle is greater than the size W5 of the seat locking device 12 in the left-right direction of the vehicle. That is, it has the relationship of W4 > W5. Moreover, in the rear view of the vehicle, the size W4 of the vehicle electronic control device 14 in the left-right direction of the vehicle is greater than or equal to the size W6 of the battery 131 of the battery unit 13 in the left-right direction of the vehicle. That is, it has the relationship of W4 ≥ W6. Moreover, the size W4 of the vehicle electronic control device 14 in the left-right direction of the vehicle may be substantially the same as the size W7 of the rear wall portion 132a of the battery box 132 in the left-right direction of the vehicle, and may be also greater than the size W7 of the rear wall portion 132a of the battery box 132 in the left-right direction of the vehicle. The size W4 of the vehicle electronic control device 14 in the left-right direction of the vehicle may be also greater than the size of the overall battery unit 13 in the left-right direction of the vehicle.

As shown in FIG. 4(c) and FIG. 4(d), a license plate bracket 16 is disposed on the battery unit 13. The license plate bracket 16 extending rearwards from the lower portion of the battery box 132 is disposed on the battery box 132 of the battery unit 13. In the embodiment, the license plate bracket 16 extends backwards and downwards from the rear wall portion 132a of the battery box 132, and forms a whole body with the battery box 132. The license plate bracket 16 may be also formed in a manner of extending from any position of the wall surface of the battery box 132. The license plate bracket 16 may be also formed by being separated from the battery box 132. In the embodiment, the license plate bracket 16 is disposed below the vehicle electronic control device 14, and is located further backward than the rear edge 14f of the vehicle electronic control device 14 in the front-back direction of the vehicle.

As shown in FIG. 5(c), the license plate bracket 16 is located further backward than the rear edge 12d of the seat locking device 12. The license plate bracket 16 is located further below than the lower edge 12a of the seat locking device 12. Moreover, the license plate bracket 16 is located further below than the lower edge 14d of the vehicle electronic control device 14. As shown in FIG. 5(c), the rear edge 16a of the license plate bracket 16 is disposed further backward than the rear edge 14f of the vehicle electronic control device 14. In the embodiment, the license plate bracket 16 extends backwards and downwards from the rear wall portion 132a of the battery box 132, and therefore, even if in a condition that gaps are reserved between the vehicle electronic control device 14 and the battery unit 13, a passage for accessing the seat locking device 12 from the lower side of the vehicle can be blocked by the license plate bracket 16. Therefore, most portion of the passage for accessing the seat locking device 12 may be blocked by the license plate bracket 16, so as to further prevent stealing or trick and the like to the seat locking device 12.

As shown in FIG. 8, in the rear view of the vehicle, the vehicle electronic control device 14 includes: a first portion 14b, which is higher than the upper wall portion 13a of the battery unit 13 in the up-down direction of the vehicle; and a second portion 14c, which is lower than the upper wall portion 13a of the battery unit 13 in the up-down direction of the vehicle. The size of at least a part of the first portion 14b in the left-right direction of the vehicle is substantially the same as the size W7 of the rear wall portion 132a of the battery box 132 in the left-right direction of the vehicle. Moreover, as shown in FIG. 8, the size of the battery box 132 including the stay 134a in the left-right direction of the vehicle is greater than the size of the first portion 14b in the left-right direction of the vehicle.

Further, as shown in FIG. 8, in the rear view of the vehicle, the size W6 of the battery 131 of the battery unit 13 in the left-right direction of the vehicle is greater than the size W5 of the seat locking device 12 in the left-right direction of the vehicle. That is, it has the relationship of W6>W5. Moreover, in the rear view of the vehicle, the size of the rear wall portion 132a of the battery box 132 in the left-right direction of the vehicle is greater than the size W5 of the seat locking device 12 in the left-right direction of the vehicle. That is, it has a relationship of W7>W5.

### <The spacing board>

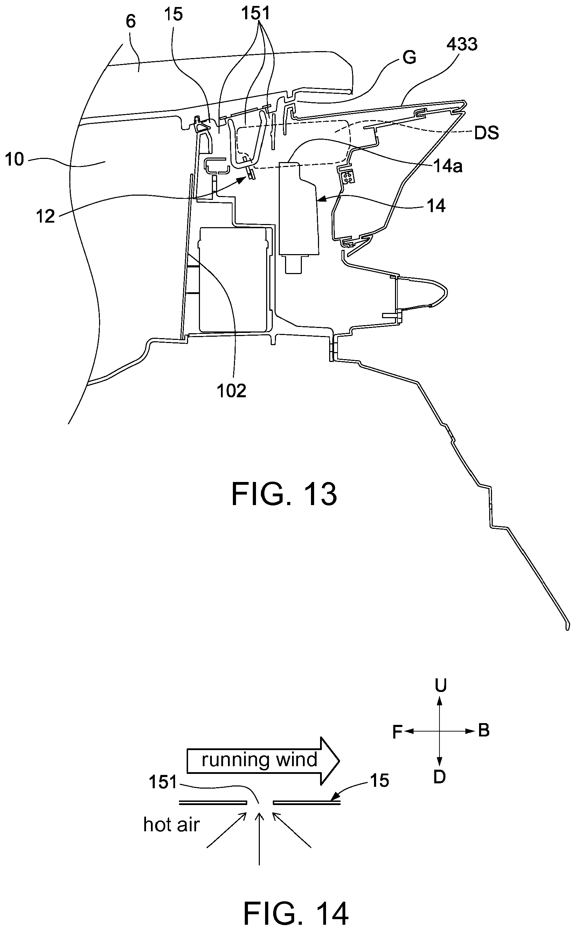

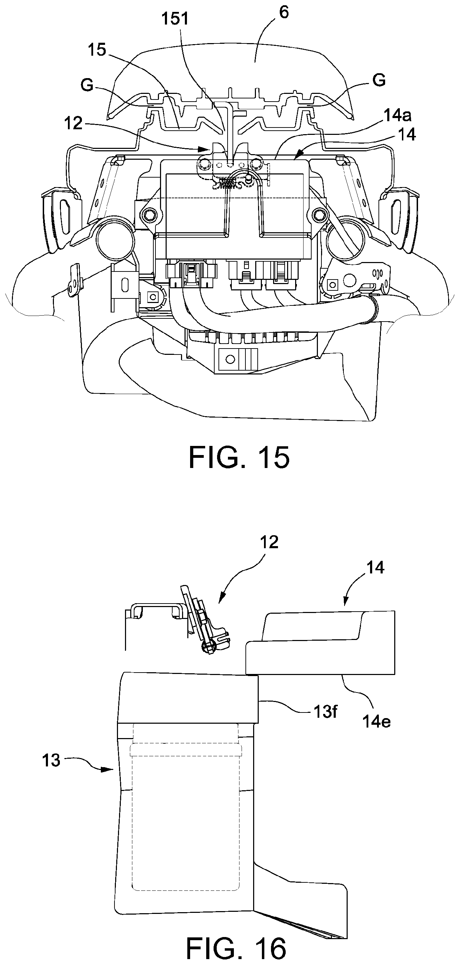

FIG. 10 is a rear view of the rear portion of the straddle-type vehicle 1 in a state that the seat portion of FIG. 4(b) is opened. FIG. 11 is a left side view of the rear portion of the straddle-type vehicle 1 in a state that the seat portion of FIG. 4(d) is opened. FIG. 12(a) is a top view of FIG. 10, FIG. 12(b) is a top view of the shielded portion of the seat locking device 12 represented by dash lines of FIG. 12(a). FIG. 13 is a section view of line III-III of FIG. 2, FIG. 14 is an exemplary diagram when the wind during running flows above the opening 151, and FIG. 15 is a section view of line II-II line of FIG. 4(d). Furthermore, in FIG. 12(a) and FIG. 12(b), hatching lines are marked at the peripheries of the opening 151 and the auxiliary opening 151d of the spacing board 15 to strengthen the opening 151 and the auxiliary opening 151d.

As shown in FIG. 11 and FIG. 13, in the up-down direction of the vehicle, the spacing board 15 is disposed further below than the seat portion 6 and further above than the vehicle electronic control device 14. In the embodiment, the spacing board 15 forms a whole body with the storage box 10 in a manner that the upper edge portion 102a of the rear wall portion 102 of the storage box 10 protrudes backwards. The spacing board 15 may also be formed as a part by being separated from the storage box 10. Moreover, the spacing board 15 may also form a whole body with the rear cover portion 43 in a manner of protruding forwards from the rear side rear cover portion 433 (referring to FIG. 1) of the rear cover portion 43. In addition, the spacing board 15 may also form a whole body with, for example, the left rear cover portion 432L, the right rear cover portion 432R, the left seat frame 23L or the right seat frame 23R and the like.

As shown in FIG. 12(a) and FIG. 12(b), the spacing board 15 includes an opening 151 in a portion for the seat hook 61 to pass when the seat portion 6 is opened or closed. In the embodiment, the opening 151 is a through hole running through in the up-down direction. The opening 151 may be a hole with the circumference being totally closed, or may be a notch which is partially open. For example, in a condition that the spacing board 15 and the storage box 10 form a whole body, it may be also as follows: the spacing board 15 and the opening 151 of the spacing board 15 are formed by protruding backwards from the upper edge portion 102a of the rear wall portion 102 of the storage box 10 and presenting a C shape in a top view of the vehicle in a manner of not shielding the seat locking device 12 in a top view of the vehicle. Similarly, in the condition that the spacing board 15 and the rear cover portion 43 form a whole body, it may also be as follows: the spacing board 15 and the opening 151 of the spacing board 15 are formed by presenting a C shape in a top view of the vehicle in a manner of not shielding the seat locking device 12 in a top view of the vehicle.

As shown in FIG. 13, the opening 151 of the spacing board 15 is located further above than the upper edge 14a of the vehicle electronic control device 14. The opening 151 of the spacing board 15 is located above the seat locking device 12. As shown in FIG. 12(a) and FIG. 12(b), the opening 151 of the spacing board 15 is overlapped with the seat locking device 12 in a top view of the vehicle. More specifically, the opening 151 of the spacing board 15 overlaps with the main guide slot 121a and the auxiliary guide slot 122a of the seat locking device 12 in a top view of the vehicle.

As shown in FIG. 11, a heat dissipation space DS for heat dissipation of the vehicle electronic control device 14 is formed above the vehicle electronic control device 14. As shown in FIG. 13, the heat dissipation space DS is a space encircled by the rear side rear cover portion 433 and the spacing board 15 above the vehicle electronic control device 14. Heat dissipated from the vehicle electronic control device 14 is released to the heat dissipation space DS above the vehicle electronic control device 14 via the accommodating box 145 of the vehicle electronic control device 14. In a condition that the upper edge 14a of the vehicle electronic control device 14 is disposed in a state of being located further above than at least a part of the seat locking device 12, the heat dissipation space is shrunk in comparison with a state of being located further below the seat locking device 12, and therefore, a problem of reduction of heat dissipation may be generated additionally.

As shown in FIG. 11 and FIG. 13, in a state that the seat portion 6 is closed, a space DS' is formed above the spacing board 15 and below the seat portion 6. The space DS' is a space encircled by the lower surface of the seat portion 6 above the spacing board 15 in a state that the seat portion 6 is closed.

The heat dissipation space DS communicates with the space DS' via the opening 151 of the spacing board 15. Because the vehicle electronic control device 14 is disposed behind the battery unit 13, and the upper edge 14a is disposed in a state of being located further above than at least a part of the seat locking device 12, the heat dissipation space DS above the vehicle electronic control device 14 is closer to the spacing board 15 than the battery unit 13. In addition, as shown in FIG. 11 and FIG. 13, the heat dissipation space DS communicates with the space DS' above the spacing board 15 via the opening 151 of the spacing board 15.

Furthermore, the vehicle electronic control device 14 may be also disposed in a manner that the upper edge 14a inclines forwards and faces the opening 151 of the spacing board 15. Cooling fins may also be formed on the upper edge 14a of the vehicle electronic control device 14, and the cooling fins may be formed in a manner of extending towards the opening 151 of the spacing board 15.

As shown in FIG. 13 and FIG. 15, in a state that the seat portion 6 is closed, a gap G is formed when parts were assembled at the boundary of the seat portion 6 and the spacing board 15. Similarly, in a state that the seat portion 6 is closed, a gap (not shown in the drawings) is also formed when parts were assembled at the boundary of the seat portion 6 and the storage box 10. When the vehicle runs on the pavement, the wind during running blows randomly from the front of the rider. The running wind during running is guided to the upper side of the spacing board 15 along the boundary of the seat portion 6 and the storage box 10 or the lower surface of the seat portion 6 if flowing into the gap at the boundary of the seat portion 6 and the storage box 10. Specifically, the running wind during running flowing into the gap at the boundary of the seat portion 6 and the storage box 10 flows backwards along the surfaces of the left rear cover portion 432L and the right rear cover portion 432R and the lower surface of the seat portion 6. Moreover, as shown in FIG. 15, the running wind during running flowing into the gap G at the boundary of the seat portion 6 and the spacing board 15 is also guided to the upper side of the spacing board 15.

As shown in FIG. 14, the running wind during running forms backward air flow above the opening 151 of the spacing board 15. The pressure of the running wind during running flowing through the upper side of the spacing board 15 becomes lower. Correspondingly, the pressure of hot air below the spacing board 15 becomes higher than that of the running wind during running below the spacing board 15. Therefore, the hot air with relatively high pressure is sucked into the running wind during running with relatively low pressure via the opening 151 and is taken away along with the running wind during running. The running wind during running taking away the hot air, for example, is discharged out of the vehicle via the gap G (referring to FIG. 13 and FIG. 15) formed at the boundary of the seat portion 6 and the spacing board 15.

Moreover, as shown in FIG. 12(a), in the embodiment, the opening 151 forms a T shape in a top view of the vehicle. As shown in FIG. 12(b), the opening 151 includes an opening front side 151b extending along the left-right direction of the vehicle and an opening rear side 151c extending along the front-back direction of the vehicle. As shown in FIG. 12(a), the cross member 11 is exposed from the opening front side 151b, and the seat locking device 12 is exposed from the opening rear side 151c.

As shown in FIG. 12(a), in the embodiment, in a top view of the vehicle, in the left-right direction of the vehicle, the size of the opening front side 151b is greater than the size W5 of the seat locking device. However, the size of the opening front side 151b may be also substantially the same as the size W5, and may also be smaller than the size W5 of the seat locking device 12. Moreover, as shown in FIG. 12(a), in a top view of the vehicle, in the left-right direction of the vehicle, the size of the opening rear side 151c is greater than the size of the main guide slot 121a and the size of the auxiliary guide slot 122a of the seat locking device 12, and is smaller than the size of the base plate 121 and the size of the auxiliary plate 122.

### <The position relationship between the vehicle electronic control device and the spacing board>

As shown in FIG. 12(a), in a top view of the vehicle, the spacing board 15 is disposed by overlapping with a part of the vehicle electronic control device. The spacing board 15 may be also disposed in a manner of overlapping with the whole vehicle electronic control device. Moreover, as shown in FIG. 12(a), in a top view of the vehicle, in the front-back direction of the vehicle, the rear edge 15a of the spacing board 15 is located further backward than the front edge 14e of the vehicle electronic control device 14. Moreover, as shown in FIG. 12(a), in a top view of the vehicle, in the front-back direction of the vehicle, the rear edge 15a of the spacing board 15 is located further forward than the rear edge 14f of the vehicle electronic control device 14. However, the rear edge 15a of the spacing board 15 may be also located in a position substantially the same as that of the rear edge 14f of the vehicle electronic control device 14, and may be also located further backward than the rear edge 14f of the vehicle electronic control device 14. Moreover, in the embodiment, as shown in FIG. 12(a), in a top view of the vehicle, the rear edge 15a of the spacing board 15 is located further forward than the protruding wall portion 145g of the accommodating box 145. However, the rear edge 15a of the spacing board 15 may be also overlapped with the protruding wall portion 145g of the accommodating box 145, and may be also located further backward than the protruding wall portion 145g of the accommodating box 145.

Moreover, as shown in FIG. 12(a), in the embodiment, in a top view of the vehicle, in the left-right direction of the vehicle, the size of the spacing board 15 is greater than the size W4 of the vehicle electronic control device 14. However, the size of the spacing board 15 in the left-right direction may be also the same as the size W4, and may be also smaller than the size W4.

Moreover, as shown in FIG. 12(a), in a top view of the vehicle, in the front-back direction of the vehicle, the opening 151 is located further forward than the vehicle electronic control device 14. However, the opening 151 may be also overlapped with a part of the vehicle electronic control device 14. That is, in a top view of the vehicle, in the front-back direction of the vehicle, the rear edge 151a of the opening 151 is located further forward than the front edge 14e of the vehicle electronic control device 14. However, the rear edge 151a may be also located in a position substantially the same as that of the front edge 14e and may be also located further backward than the front edge 14e. Moreover, the rear edge 151a of the opening 151 may be also located on the protruding wall portion 145g of the accommodating box 145 of the vehicle electronic control device 14, and may be also located further backward than the rear edge 14f of the vehicle electronic control device 14.

Moreover, as shown in FIG. 12(a) and FIG. 12(b), in the embodiment, the auxiliary opening 151d is formed in the spacing board 15. The auxiliary opening 151d is disposed in a location, deviating towards the vehicle electronic control device 14, on the spacing board 15. Moreover, the rear edge 151a of the opening 151 may communicate with the auxiliary opening 151d. The auxiliary opening 151d, the same as the opening 151, is also capable of guiding heat in the heat dissipation space DS below the spacing board 15 to the spaces DS' above the spacing board 15 and below the seat portion 6. Therefore, the vehicle electronic control device 14 is capable of dissipating heat with good efficiency.

Moreover, as shown in FIG. 11, the upper edge 14a of the vehicle electronic control device 14 is disposed in a manner of being closer to the opening 151 of the spacing board 15 than the upper wall portion 13a of the battery unit 13. Specifically, as show in FIG. 11, the distance between the upper edge 14a of the vehicle electronic control device 14 and the opening 151 of the spacing board 15 in the up-down direction of the vehicle is shorter than the distance between the upper wall portion 13a of the battery unit 13 and the opening 151 of the spacing board 15 in the up-down direction of the vehicle.

Moreover, as shown in FIG. 11, in the up-down direction of the vehicle, the upper edge 14a of the vehicle electronic control device 14 is located between the upper wall portion 13a of the battery unit 13 and the opening 151 of the spacing board 15. Moreover, in the embodiment, in the up-down direction of the vehicle, the upper edge 14a of the vehicle electronic control device 14 is disposed on a side deviating towards the opening 151 of the spacing board 15 between the upper wall portion 13a of the battery unit 13 and the opening 151 of the spacing board 15. That is, in the up-down direction of the vehicle, the distance between the upper edge 14a of the vehicle electronic control device 14 and the opening 151 of the spacing board 15 in the up-down direction of the vehicle is shorter than the distance between the upper edge 14a of the vehicle electronic control device 14 and the upper wall portion 13a of the battery unit 13 in the up-down direction of the vehicle.

### <Effects of the embodiments>

### (1)

As mentioned above, the straddle-type vehicle 1 in the embodiment includes: left and right seat frames 23L and 23R, which extend along the front-back direction of the vehicle; a storage box 10, which includes an open portion 101 opened upwards, and is disposed between the left and right seat frames 23L and 23R; a left rear cover portion 432L, which is disposed further leftward in the left-right direction of the vehicle than the left seat frame 23L and the storage box 10; a right rear cover portion 432R, which is disposed further rightward in the left-right direction of the vehicle than the right seat frame 23R and the storage box 10; a seat portion 6, which may be opened or closed relative to the open portion 101 of the storage box 10, and is provided with a seat hook 61 disposed at the rear portion and extending downwards; a seat locking device 12, which is provided with a seat lock member 123 for locking the seat hook 61 and an unlocking operating member 126 used for unlocking the seat lock member 123; a battery unit 13, which is disposed behind the storage box 10 in the front-back direction of the vehicle; and a vehicle electronic control device 14, which is provided with a control circuit 142 and a driving circuit 141, and disposed behind the battery unit 13, wherein the driving circuit 141 drives a driven device, and the heat generation quantity is greater than that of the control circuit 142; furthermore, the battery unit 13 is disposed below the seat locking device 12, and overlaps with the seat locking device 12 in a top view of the vehicle; the upper edge 14a of the vehicle electronic control device 14 is disposed in a state of protruding further above than the upper wall portion 13a of the battery unit 13 and being located further above than at least a part of the seat locking device 12.

As shown in FIG. 1 and FIG. 2, the straddle-type vehicle 1 in the embodiment includes: the left and right seat frames 23L and 23R, which extend along the front-back direction of the vehicle; the storage box 10, which includes an open portion 101 opened upwards, and is disposed between the left and right seat frames 23L and 23R; the left rear cover portion 432L, which is disposed further leftward in the left-right direction of the vehicle than the left seat frame 23L and the storage box 10; and the right rear cover portion 432R, which is disposed further rightward in the left-right direction of the vehicle than the right seat frame 23R and the storage box 10. According to the structure, an internal space IS of the vehicle body rear cover encircled by the storage box 10 and the left and right rear cover portions 432L and 432R is formed.

Moreover, as shown in FIG. 1 and FIG. 3, the straddle-type vehicle 1 in the embodiment includes: the seat portion 6, which may be opened or closed relative to the open portion 101 of the storage box 10, and is provided with the seat hook 61 disposed at the rear portion and extending downwards; and the seat locking device 12, which is provided with the seat lock member 123 for locking the seat hook 61 and the unlocking operating member 126 used for unlocking the seat lock member 123. The straddle-type vehicle 1 further includes: the battery unit 13, which is disposed behind the storage box 10 in the front-back direction of the vehicle; and the vehicle electronic control device 14, which is provided with the control circuit 142 and the driving circuit 141, and disposed behind the battery unit 13, wherein the driving circuit 141 drives the driven device, and the heat generation quantity is greater than that of the control circuit 142. According to the structure, the vehicle electronic control device 14, the seat locking device 12 and the battery box 13 are disposed in the internal space IS of the vehicle body rear cover encircled by the storage box 10 and the left and right rear cover portions 432L and 432R.

Moreover, as shown in FIG. 3 and FIG 11, the battery unit 13 is disposed below the seat locking device 12, and overlaps with the seat locking device 12 in a top view of the vehicle; and the upper edge 14a of the vehicle electronic control device 14 is disposed in a state of protruding further above than the upper wall portion 13a of the battery unit 13 and being located further above than at least a part of the seat locking device 12.

According to the structure, the battery unit 13 is disposed below the seat locking device 12 in a manner of being overlapped with the seat locking device 12 in a top view of the vehicle, and the upper edge 14a of the vehicle electronic control device 14 disposed behind the battery unit 13 is disposed by protruding further above than the upper wall portion 13a of the battery unit 13 in a state of being located further above than at least a part of the seat locking device 12. The result is that spaces behind and below the seat locking device 12 are shielded by the vehicle electronic control device 14 and the battery unit 13, and therefore, it is hard to access the seat locking device 12 from the rear side or the lower side of the vehicle, so as to prevent stealing or trick to the seat locking device 12.

Moreover, as shown in FIG. 3 and FIG. 11, the straddle-type vehicle 1 further includes a spacing board, the spacing board is disposed further below than the seat portion 6 and further above than the vehicle electronic control device 14 in the up-down direction of the vehicle, and forms an opening 151 for the seat hook 61 to pass; and the opening 151 is located further above than the upper edge 14a of the vehicle electronic control device 14 and above the seat locking device 12, and is overlapped with the seat locking device 12 in a top view of the vehicle.

According to the structure, deterioration of attractiveness may be prevented by the spacing board. Moreover, the vehicle electronic control device 14 is close to the opening 151, and therefore, heat energy of the vehicle electronic control device 14 is released to the spaces DS' above the spacing board 15 and below the seat portion 6 via the opening 151.

### (2)

Moreover, in a preferable form of the straddle-type vehicle 1 of the embodiment, the purport is as follows: in the up-down direction of the vehicle, the distance W1 between the upper edge 14a of the vehicle electronic control device 14 and upper wall portion 13a of the battery unit 13 is longer than the distance W2 between the lower edge 12a of the seat locking device 12 and the upper wall portion 13a of the battery unit 13.

According to the embodiment, as shown in FIG. 8, in the up-down direction of the vehicle, the distance W1 between the upper edge 14a of the vehicle electronic control device 14 and the upper wall portion 13a of the battery unit 13 is longer than the distance between the lower edge 12a of the seat locking device 12 and the upper wall portion 13a of the battery unit 13. Therefore, in a state that the seat portion 6 is closed, even if in a condition that a person intends to access the seat locking device 12 towards the upward front from positions behind or below the vehicle, especially from the lower rear side of the vehicle, it is hard to access the seat locking device 12 illegitimately because at least a part of the seat locking device 12 is shielded by the vehicle electronic control device 14, so as to prevent stealing or trick and the like to the seat locking device 12.

### (3)

Moreover, in a preferable form of the straddle-type vehicle 1 of the embodiment, the purport is as follows: the distance W31 between the left edge 12b of the seat locking device 12 and the left edge 13c of the battery unit 13 in the left-right direction of the vehicle and the distance W32 between the right edge 12c of the seat locking device 12 and the right edge 13d of the battery unit 13 in the left-right direction of the vehicle are both longer than or equal to the distance W2 between the lower edge 12a of the seat locking device 12 and the upper wall portion 13a of the battery unit 13 in the up-down direction of the vehicle.

According to the embodiment, as shown in FIG. 8, the distance W31 between the left edge 12b of the seat locking device 12 and the left edge 13c of the battery unit 13 in the left-right direction of the vehicle and the distance W32 between the right edge 12c of the seat locking device 12 and the right edge 13d of the battery unit 13 in the left-right direction of the vehicle are both longer than or equal to the distance W2 between the lower edge 12a of the seat locking device 12 and the upper wall portion 13a of the battery unit 13 in the up-down direction of the vehicle. Therefore, in a state that the seat portion 6 is closed, even if in a condition that a person intends to access the seat locking device 12 from positions behind or below the vehicle towards the upper right side, especially from the lower left side of the battery unit 13 in the left-right direction of the vehicle, it is hard to access the seat locking device 12 because the distance W31 between the left edge 12b of the seat locking device 12 and the left edge 13c of the battery unit 13 in the left-right direction of the vehicle is longer than or equal to the distance W2 between the lower edge 12a of the seat locking device 12 and the upper wall portion 13a of the battery unit 13 in the up-down direction of the vehicle, so as to prevent stealing or trick and the like to the seat locking device 12. Moreover, even if in a condition that a person intends to access the seat locking device 12 from the lower right side of the battery unit 13 in the left-right direction of the vehicle towards the left upper side, it is hard to access the seat locking device 12 because the distance W32 between the right edge 12c of the seat locking device 12 and the right edge 13d of the battery unit 13 in the left-right direction of the vehicle is longer than or equal to the distance W2 between the lower edge 12a of the seat locking device 12 and the upper wall portion 13a of the battery unit 13 in the up-down direction of the vehicle, so as to prevent stealing or trick and the like to the seat locking device 12.

### (4)

Moreover, in a preferable form of the straddle-type vehicle 1 of the embodiment, the purport is as follows: the battery unit 13 includes a battery box 132 for accommodating a battery 131, and the vehicle electronic control device 14 is installed at the rear wall portion 132a of the battery box 132.

According to the embodiment, as shown in FIG. 5(b), the battery unit 13 includes the battery box 132 for accommodating the battery 131, and the vehicle electronic control device 14 is installed at the rear wall portion 132a of the battery box 132. Therefore, the battery unit 13 further includes the battery box 132 to shield a larger area of the seat locking device 12, and therefore, the protective function of the battery box 132 to the seat locking device 12 is better, so as to prevent stealing or trick and the like to the seat locking device 12. Moreover, the vehicle electronic control device 14 may be easily fixed on the battery box 132 of the battery unit 13 at low cost.

### (5)

Moreover, in a preferable form of the straddle-type vehicle 1 of the embodiment, the purport is as follows: the battery box 132 is provided with a license plate bracket 16 extending rearwards from the lower portion of the battery box 132.

According to the embodiment, as shown in FIG. 4(c) and FIG. 4(d), the battery box 132 is provided with the license plate bracket 16 extending rearwards from the lower portion of the battery box 132. Therefore, even if in a condition that a person intends to access the seat locking device 12 from the lower side of the vehicle towards the upper side, it is hard to access the seat locking device 12 because the license plate bracket 16 extending rearwards from the lower portion of the battery box 132 can block most part of a passage for accessing, so as to prevent stealing or trick and the like to the seat locking device 12.

### (6)

Moreover, in a preferable form of the straddle-type vehicle 1 of the embodiment, the purport is as follows: in the rear view of the vehicle, the size W4 of the vehicle electronic control device 14 in the left-right direction of the vehicle is greater than the size W5 of the seat locking device 12 in the left-right direction of the vehicle, and is greater than the size W6 of the battery 131 in the left-right direction of the vehicle.

According to the embodiment, as shown in FIG. 8, in the rear view of the vehicle, the size W4 of the vehicle electronic control device 14 in the left-right direction of the vehicle is greater than the size W5 of the seat locking device 12 in the left-right direction of the vehicle, and is greater than the size W6 of the battery 131 in the left-right direction of the vehicle. Therefore, the size W4 of the vehicle electronic control device 14 in the left-right direction of the vehicle is greater than the sizes W5 and W6 of the seat locking device 12 and the battery 131 in the left-right direction of the vehicle, and then it is hard to access the seat locking device 12 from two sides of the vehicle electronic control device 14 in the left-right direction of the vehicle or from the rear side of the vehicle electronic control device 14 in the front-back direction of the vehicle, so as to prevent stealing or trick and the like to the seat locking device 12.

### (7)

Moreover, in a preferable form of the straddle-type vehicle 1 of the embodiment, the purport is as follows: as for a portion higher than the upper edge of the battery box 132 in the up-down direction of the vehicle in the vehicle electronic control device 14, the size of at least a part in the left-right direction of the vehicle is substantially the same as the size W7 of the rear wall portion 132a of the battery box 132 in the left-right direction of the vehicle.

According to the embodiment, as shown in FIG. 8, as for the portion higher than the upper edge of the battery box 132 in the up-down direction of the vehicle in the vehicle electronic control device 14, the size of at least a part in the left-right direction of the vehicle is substantially the same as the size W7 of the rear wall portion 132a of the battery box 132 in the left-right direction of the vehicle. Therefore, the size of a space formed by the front side of the vehicle electronic control device 14 and the upper side of the battery box 132 may be ensured, and therefore, it is hard to access the seat locking device 12 from two sides of the vehicle electronic control device 14 in the left-right direction of the vehicle or the rear side of the vehicle electronic control device 14 in the front-back direction of the vehicle, so as to prevent stealing or trick and the like to the seat locking device 12.

### (8)

Moreover, in a preferable form of the straddle-type vehicle 1 of the embodiment, the purport is as follows: the upper edge 14a of the vehicle electronic control device 14 is disposed in a state of protruding further above than the upper wall portion 13a of the battery unit 13 and being located further above than at least a part of the unlocking operating member 126.

According to the embodiment, as shown in FIG. 4(b), the upper edge 14a of the vehicle electronic control device 14 is disposed in a state of protruding further above than the upper wall portion 13a of the battery unit 13 and being located further above than at least a part of the unlocking operating member 126. Therefore, at least a part of the unlocking operating member 126 is shielded by the vehicle electronic control device 14. The result is that, in a state that the seat portion 6 is closed, even if in a condition that a person intends to access the unlocking operating member 126 of the seat locking device 12 from positions behind or below the vehicle, especially from the rear side of the vehicle, it is hard to access the seat locking device 12 because the rear side of the unlocking operating member 126 is shielded by the vehicle electronic control device 14, so as to prevent stealing or trick and the like to the seat locking device 12.

### (9)

Moreover, in a preferable form of the straddle-type vehicle 1 of the embodiment, the purport is as follows: a cross member 11 installed in the left and right seat frames 23L and 23R is further disposed behind the storage box 10 in the front-back direction of the vehicle, and the seat locking device 12 is disposed on the cross member 11.

According to the embodiment, as shown in FIG. 3 and FIG. 5(a), the cross member 11 installed in the left and right seat frames 23L and 23R is further disposed behind the storage box 10 in the front-back direction of the vehicle, and the seat locking device 12 is disposed on the cross member 11. Therefore, the seat locking device 12 may be disposed on the cross member 11 corresponding to the center position of the battery unit 13 below, and therefore, it is hard to access the seat locking device 12 from below either at the left side or the right side of the battery unit 13, so as to prevent stealing or trick and the like to the seat locking device 12.

### (10)

Moreover, in a preferable form of the straddle-type vehicle 1 of the embodiment, the purport is as follows: when the seat portion 6 is closed, a gap is formed at the boundary of the seat portion 6 and the storage box 10, and a space above the spacing board 15 communicate with the gap, so as to form a heat dissipation path.

According to the embodiment, as shown in FIG. 13 and FIG. 14, when the seat portion 6 is closed, the gap is formed at the boundary of the seat portion 6 and the storage box 10, and the space above the spacing board 15 communicates with the gap, so as to form the heat dissipation path. Therefore, during running the vehicle, the running wind during running blown from the front is guided to the opening 151 via the gap at the boundary of the seat portion 6 and the storage box 10, and forms backward air flow above the opening 151, and therefore, heat and air below the opening 151 are sucked to the upper side of the opening 151 together and are discharged out of the vehicle along with the running wind during running. This results in that the vehicle electronic control device 14 is capable of dissipating heat with good efficiency.

### <Other embodiments>

FIG. 16 is a schematic diagram representing the varying case of the disposition position of the battery unit 13 and the vehicle electronic control device 14. In the abovementioned embodiments, the front edge 14e of the vehicle electronic control device 14 is disposed in a manner of being opposite to the rear edge 13f of the battery unit 13. However, the front edge 14e of the vehicle electronic control device 14 and the rear edge 13f of the battery unit 13 may be also disposed with an angle formed therebetween in the side view of the vehicle. In the varying case, the front edge 14e of the vehicle electronic control device 14 and the rear edge 13f of the battery unit 13 are disposed in a manner of being perpendicular to each other.

Moreover, the present teaching is not limited to motorcycles, and is also applicable to scooter-type vehicles in the aspect of driven tricycles. For example, it may include two front wheels and one rear wheel. Furthermore, the present teaching is also applicable to straddle-type vehicles besides the scooter-type vehicles, such as four-wheeled cross country vehicles including electric vehicles, sport type motorcycles, lightweight motorcycles with pedals or all terrain vehicles (ATV). The electric vehicles are not limited to a two-wheeled vehicle, and also include three-wheeled vehicles. Furthermore, in the condition of being applied to the electric vehicles, a motor instead of an engine serves as a power unit.

### List of Reference Numerals

- 1: Straddle-type vehicle
- 2: Vehicle body frame
- 21: Head pipe
- 22: Front frame portion
- 23: Rear frame portion
- 23L: Left seat frame
- 23R: Right seat frame
- 3: Steering mechanism
- 4: Vehicle body cover
- 41: Front cover portion
- 42: Handle cover portion
- 43: Rear cover portion
- 431: Front side rear cover portion
- 432L: Left rear cover portion
- 432R: Right rear cover portion
- 433: Rear side rear cover portion
- 44: Footboard portion
- 5: Front wheel
- 6: Seat portion
- 61: Seat hook
- 7: Rear wheel
- 8: Handle
- 9: Front fork
- 10: Storage box
- 101: Open portion
- 102: Rear wall portion
- 102a: Upper edge portion
- 11: Cross member
- 12: Seat locking device
- 12a: Lower edge
- 12b: Left edge
- 12c: Right edge
- 12d: Rear edge
- 12e: Front edge
- 121: Base plate
- 121a: Main guide slot
- 122: Auxiliary plate
- 122a: Auxiliary guide slot
- 123: Seat lock member
- 123a: Spring mounting portion
- 123b: Lock member portion
- 123c: Retaining slot
- 124: Stopper plate
- 124a: Spring mounting portion
- 124b: Cable mounting portion
- 125: Extension spring
- 126: Unlocking operating member
- 13: Battery unit
- 13a: Upper wall portion
- 13b: Lower wall portion
- 13c: Left edge
- 13d: Right edge
- 13e: Front edge
- 13f: Rear edge
- 131: Battery
- 131a: Front edge
- 131b: Rear edge
- 131c: Upper edge
- 131d: Lower edge
- 132: Battery box
- 132a: Rear wall portion
- 132b: Front edge
- 132c: Left edge
- 132d: Right edge
- 132e: Upper edge
- 132f: Lower edge
- 133: Open portion
- 134a: Stay
- 14: Vehicle electronic control device
- 14a: Upper edge
- 14b: First portion
- 14c: Second portion
- 14d: Lower edge
- 14e: Front edge
- 14f: Rear edge
- 141: Driving circuit
- 141a: Heat generating element
- 141b: Tall component
- 142: Control circuit
- 143: Electronic part
- 144: Substrate
- 144a: First mounting surface
- 144b: Second mounting surface
- 145: Accommodating box
- 145a: Open portion
- 145b: Side wall portion
- 145c: Stay
- 145e: Upper wall portion
- 145f: Lower wall portion
- 145g: Protruding wall portion
- 146: Connector
- 146a: Embedding portion
- 15: Spacing board
- 15a: Rear edge
- 151: Opening
- 151a: Rear edge
- 151b: Opening front side
- 151c: Opening rear side
- 151d: Auxiliary opening
- 16: License plate bracket
- C: Object side connector
- DS: Heat dissipation space
- DS': Space
- IS: Internal space
- PU: Power unit
- SS: Storage space
- W1: Distance
- W2: Distance
- W31, W32: Distance
- W4: Size
- W5: Size
- W6: Size
- W7: Size
- θ2: Angle
- θ31, θ32: Angle

## Claims

1. A straddle-type vehicle, comprising:
left and right seat frames (23L, 23R), extending along a front-back direction of the vehicle;
a storage box (10), comprising an open portion (101) opened upwards in an up-down direction of the vehicle, and disposed between the left and right seat frames (23L, 23R) in a left-right direction of the vehicle;
a left rear cover portion (432L), disposed further leftward in the left-right direction of the vehicle than the left seat frame (23L) and the storage box (10);
a right rear cover portion (432R), disposed further rightward in the left-right direction of the vehicle than the right seat frame and the storage box (10);
a seat portion (6), capable of being opened or closed relative to the open portion (101) of the storage box (10);
a battery unit (13), disposed behind the storage box (10) in the front-back direction of the vehicle; and
a vehicle electronic control device (14), provided with a control circuit (142) and a driving circuit (141), and disposed behind the battery unit (13) in the front-back direction of the vehicle, the driving circuit (141) is configured for driving a driven device, wherein a heat generation quantity of the driving circuit (141) is greater than a
heat generation quantity of the control circuit (142); and
the straddle-type vehicle being **characterised in that**:
the seat portion (6) is provided with a seat hook (61) disposed at a rear portion of seat portion (6) in the front-back direction of the vehicle and extending downwards in the up-down direction of the vehicle;
a seat locking device (12) is provided with a seat lock member (123) for locking the seat hook (61) and an unlocking operating member (126) used for unlocking the seat lock member (123); and
the battery unit (13) is disposed below the seat locking device (12) in the up-down direction of the vehicle, and overlaps with the seat locking device (12) in a top view of the vehicle;
an upper edge (14a) of the vehicle electronic control device (14) is disposed in a state of protruding further above than the upper wall portion (13a) of the battery unit (13) and is located further above than at least a part of the seat locking device (12) in the up-down direction of the vehicle;
the straddle-type vehicle being further **characterised in that** it comprises a spacing board (15), the spacing board (15) being disposed further below than the seat portion (6) and further above than the vehicle electronic control device (14) in the up-down direction of the vehicle, and forming an opening (151) for the seat hook (61) to pass; and
the opening (151) being located further above than the upper edge (14a) of the vehicle electronic control device (14) and above the seat locking device (12) in the up-down direction of the vehicle, and overlapping with the seat locking device (12) in a top view of the vehicle.

2. The straddle-type vehicle according to claim 1, wherein in the up-down direction of the vehicle, a distance (W1) between the upper edge (14a) of the vehicle electronic control device (14) and the upper wall portion (13a) of the battery unit (13) is longer than a distance (W2) between the lower edge (12a) of the seat locking device (12) and the upper wall portion (13a) of the battery unit (13).

3. The straddle-type vehicle according to claim 2, wherein a distance (W31) between a left edge (12b) of the seat locking device (12) and a left edge (13c) of the battery unit (13) in the left-right direction of the vehicle and a distance (W32) between a right edge (12c) of the seat locking device (12) and a right edge (13d) of the battery unit (13) in the left-right direction of the vehicle are both longer than or equal to the distance (W2) between the lower edge (12a) of the seat locking device (12) and the upper wall portion (13a) of the battery unit (13) in the up-down direction of the vehicle.

4. The straddle-type vehicle according to at least one of the claims 1 to 3, wherein the battery unit (13) comprises a battery box (132) for accommodating a battery (131), and
the vehicle electronic control device (14) is installed at a rear wall portion (132a) of the battery box (132) in the front-back direction of the vehicle.

5. The straddle-type vehicle according to claim 4, wherein a license plate bracket (16) extending rearwards in the front-back direction of the vehicle from a lower portion of the battery box (132) is provided on the battery box (132).

6. The straddle-type vehicle according to claim 4 or 5, wherein in a rear view of the vehicle, a size (W4) of the vehicle electronic control device (14) in the left-right direction of the vehicle is greater than a size (W5) of the seat locking device (12) in the left-right direction of the vehicle, and is greater than a size (W6) of the battery (131) in the left-right direction of the vehicle.

7. The straddle-type vehicle according to at least one of the claims 4 to 6, wherein as for a portion higher than an upper edge of the battery box (132) in the up-down direction of the vehicle in the vehicle electronic control device (14), a size of at least a part in the left-right direction of the vehicle is substantially the same as a size (W7) of the rear wall portion (132a) of the battery box (132) in the left-right direction of the vehicle.

8. The straddle-type vehicle according to at least one of the claims 1 to 7, wherein the upper edge (14a) of the vehicle electronic control device (14) is disposed in a manner protruding further above than the upper wall portion (13a) of the battery unit (13) in the up-down direction of the vehicle, and located further above in the up-down direction of the vehicle than at least a part of an unlocking operating member (126).

9. The straddle-type vehicle according to at least one of the claims 1 to 8, wherein a cross member (11) installed on the left and right seat frames (23L, 23R) is further provided behind the storage box (10) in the front-back direction of the vehicle, and the seat locking device (12) being disposed on the cross member (11).

10. The straddle-type vehicle according to at least one of the claims 1 to 9, wherein when the seat portion (6) is closed, a gap is formed at a boundary of the seat portion (6) and the storage box (10), and a space (DS') above the spacing board (15) communicates with the gap, so as to form a heat dissipation path.

## Patentansprüche

1. Ein Spreiz-Sitz-Typ-Fahrzeug, das umfasst:
linke und rechte Sitz-Rahmen (23L, 23R), die sich entlang einer Front-Rück-Richtung des Fahrzeugs erstrecken;
eine Stau-Box (10), die einen offenen Abschnitt (101) umfasst, der in einer Aufwärts-Abwärts-Richtung des Fahrzeugs nach oben geöffnet ist, und zwischen dem linken und rechten Sitz-Rahmen (23L, 23R) in einer Links-Rechts-Richtung des Fahrzeugs angeordnet ist;
einen linken hinteren Abdeckungs-Abschnitt (432L), der in der Links-Rechts-Richtung des Fahrzeugs weiter links angeordnet ist als der linke Sitz-Rahmen (23L) und die Stau-Box (10);
einem rechten hinteren Abdeckungs-Abschnitt (432R), der in der Links-Rechts-Richtung des Fahrzeugs weiter rechts angeordnet ist als der rechte Sitz-Rahmen und die Stau-Box (10);
einen Sitz-Abschnitt (6), der relativ zu dem offenen Abschnitt (101) des Staukastens (10) geöffnet oder geschlossen werden kann;
eine Batterie-Einheit (13), die hinter der Stau-Box (10) in der Front-Rück-Richtung des Fahrzeugs angeordnet ist; und
eine Fahrzeug-Elektronik-Steuer-Vorrichtung (14), die mit einer Steuer-Schaltung (142) und einer Treiber-Schaltung (141) vorgesehen ist, und hinter der Batterie-Einheit (13) in der Front-Rück-Richtung des Fahrzeugs angeordnet ist, wobei die Treiber-Schaltung (141) zum Ansteuern einer angetriebenen Vorrichtung konfiguriert ist, wobei eine Wärme-Erzeugungs-Menge der Treiber-Schaltung (141) größer ist als eine Wärme-Erzeugungs-Menge der Steuer-Schaltung (142); und das Spreiz-Sitz-Typ-Fahrzeug **dadurch gekennzeichnet ist, dass**
der Sitz-Abschnitt (6) mit einem Sitz-Haken (61) vorgesehen ist, der an einem hinteren Abschnitt des Sitz-Abschnitts (6) in der Vorder-Rückwärts-Richtung des Fahrzeugs angeordnet ist und sich in der Aufwärts-Abwärts-Richtung des Fahrzeugs nach unten erstreckt;
eine Sitz-Verriegelungs-Vorrichtung (12) vorgesehen ist, die mit einem Sitz-Verriegelungs-Element (123) zum Verriegeln des Sitz-Hakens (61) und einem Entriegelungs-Betätigungs-Element (126) vorgesehen ist, das zum Entriegeln des Sitz-Verriegelungs-Elements (123) verwendet wird; und
die Batterie-Einheit (13) in Aufwärts-Abwärts-Richtung des Fahrzeugs unterhalb der Sitz-Verriegelungs-Vorrichtung (12) angeordnet ist und sich in einer Draufsicht auf das Fahrzeug mit der Sitz-Verriegelungs-Vorrichtung (12) überlappt;
eine obere Kante (14a) der Fahrzeug-Elektronik-Steuer-Vorrichtung (14) in einem Zustand angeordnet ist, in dem er weiter nach oben ragt als der obere Wand-Abschnitt (13a) der Batterie-Einheit (13) und sich weiter oben befindet als zumindest ein Teil der Sitz-Verriegelungs-Vorrichtung (12) in der Aufwärts-Abwärts-Richtung des Fahrzeugs;
das Spreiz-Sitz-Typ-Fahrzeug weiterhin **dadurch gekennzeichnet ist, dass** ein Abstands-Platte (15) umfasst, wobei das Abstands-Platte (15) in der Aufwärts-Abwärts-Richtung des Fahrzeugs weiter unten als der Sitz-Abschnitt (6) und weiter oben als die Fahrzeug-Elektronik-Steuer-Vorrichtung (14) des Fahrzeugs angeordnet ist und eine Öffnung (151) für den Durchgang des Sitz-Hakens (61) bildet; und
die Öffnung (151) weiter oberhalb als die obere Kante (14a) der Fahrzeug-Elektronik-Steuer-Vorrichtung (14) und oberhalb der Sitz-Verriegelungs-Vorrichtung (12) in der Aufwärts-Abwärts-Richtung des Fahrzeugs angeordnet ist und sich mit der Sitz-Verriegelungs-Vorrichtung (12) in einer Draufsicht auf das Fahrzeug überlappt.

2. Ein Spreiz-Sitz-Typ-Fahrzeug gemäß Anspruch 1, wobei in der Aufwärts-Abwärts-Richtung des Fahrzeugs ein Abstand (W1) zwischen der oberen Kante (14a) der Fahrzeug-Elektronik-Steuer-Vorrichtung (14) und dem oberen Wand-Abschnitt (13a) der Batterie-Einheit (13) größer ist als ein Abstand (W2) zwischen der unteren Kante (12a) der Sitz-Verriegelungs-Vorrichtung (12) und dem oberen Wand-Abschnitt (13a) der Batterie-Einheit (13).

3. Ein Spreiz-Sitz-Typ-Fahrzeug gemäß Anspruch 2, wobei ein Abstand (W31) zwischen einer linken Kante (12b) der Sitz-Verriegelungs-Vorrichtung (12) und einer linken Kante (13c) der Batterie-Einheit (13) in der Links-Rechts-Richtung des Fahrzeugs und ein Abstand (W32) zwischen einer rechten Kante (12c) der Sitz-Verriegelungs-Vorrichtung (12) und einer rechten Kante (13d) der Batterie-Einheit (13) in der Links-Rechts-Richtung des Fahrzeugs länger als oder gleich dem Abstand (W2) zwischen der unteren Kante (12a) der Sitz-Verriegelungs-Vorrichtung (12) und dem oberen Wand-Abschnitt (13a) der Batterie-Einheit (13) in der Aufwärts-Abwärts-Richtung des Fahrzeugs sind.

4. Ein Spreiz-Sitz-Typ-Fahrzeug gemäß zumindest einem der Ansprüche 1 bis 3, wobei die Batterie-Einheit (13) einen Batterie-Kasten (132) zur Aufnahme einer Batterie (131) aufweist, und
das Fahrzeug-Elektronik-Steuer-Vorrichtung (14) an einem Rück-Wand-Abschnitt (132a) des Batterie-Kastens (132) in Front-Rück-Richtung des Fahrzeugs installiert ist.

5. Ein Spreiz-Sitz-Typ-Fahrzeug gemäß Anspruch 4, wobei eine Kennzeichen-Halterung (16), die sich nach hinten in Front-Rück-Richtung des Fahrzeugs von einem unteren Abschnitt des Batterie-Kastens (132) erstreckt, an dem Batterie-Kasten (132) vorgesehen ist.

6. Ein Spreiz-Sitz-Typ-Fahrzeug gemäß Anspruch 4 oder 5, wobei in einer Rück-Ansicht des Fahrzeugs eine Größe (W4) der Fahrzeug-Elektronik-Steuer-Vorrichtung (14) in der Links-Rechts-Richtung des Fahrzeugs größer ist als eine Größe (W5) der Sitz-Verriegelungs-Vorrichtung (12) in der Links-Rechts-Richtung des Fahrzeugs, und größer ist als eine Größe (W6) der Batterie (131) in der Links-Rechts-Richtung des Fahrzeugs.

7. Ein Spreiz-Sitz-Typ-Fahrzeug gemäß zumindest einem der Ansprüche 4 bis 6, wobei für einen Abschnitt, der höher ist als eine obere Kante des Batterie-Kastens (132) in Aufwärts-Abwärts-Richtung des Fahrzeugs in der Fahrzeug-Elektronik-Steuer-Vorrichtung (14), eine Größe von mindestens einem Teil in Links-Rechts-Richtung des Fahrzeugs im Wesentlichen die gleiche ist wie eine Größe (W7) des Rück-WandAbschnitts (132a) des Batterie-Kastens (132) in Links-Rechts-Richtung des Fahrzeugs.

8. Ein Spreiz-Sitz-Typ-Fahrzeug gemäß zumindest einem der Ansprüche 1 bis 7, wobei die obere Kante (14a) der Fahrzeug-Elektronik-Steuer-Vorrichtung (14) in der Aufwärts-Abwärts-Richtung des Fahrzeugs weiter nach oben ragend angeordnet ist als der obere Wand-Abschnitt (13a) der Batterie-Einheit (13) und in der Aufwärts-Abwärts-Richtung des Fahrzeugs weiter oben liegt als mindestens ein Teil eines Entriegelungs-Betätigungs-Elements (126).

9. Ein Spreiz-Sitz-Typ-Fahrzeug gemäß zumindest einem der Ansprüche 1 bis 8, wobei ferner Quer-Träger (11), der an den linken und rechten Sitz-Rahmen (23L, 23R) montierter ist, weiterhin hinter der Stau-Box (10) in Front-Rück-Richtung des Fahrzeugs vorgesehen ist, und die Sitz-Verriegelungs-Vorrichtung (12) auf dem Quer-Träger (11) angeordnet ist.

10. Ein Spreiz-Sitz-Typ-Fahrzeug gemäß zumindest einem der Ansprüche 1 bis 9, wobei bei geschlossenem Sitz-Abschnitt (6) ein Spalt an einer Grenze des Sitz-Abschnitts (6) und der Stau-Box (10) gebildet ist und ein Raum (DS') oberhalb der Abstands-Platte (15) mit dem Spalt in Verbindung steht, um einen Wärme-Abfuhr-Weg zu bilden.

## Revendications

1. Véhicule de type à enfourcher, comprenant :
des cadres de siège gauche et droit (23L, 23R), s'étendant le long d'une direction avant-arrière du véhicule ;
une boîte de rangement (10), comprenant une partie ouverte (101) ouverte vers le haut dans une direction haut-bas du véhicule, et disposée entre les cadres de siège gauche et droit (23L, 23R) dans une direction gauche-droite du véhicule ;
une partie de couvercle arrière gauche (432L), disposée davantage vers la gauche dans la direction gauche-droite du véhicule que le cadre de siège gauche (23L) et la boîte de rangement (10) ;
une partie de couvercle arrière droite (432R), disposée davantage vers la droite dans la direction gauche-droite du véhicule que le cadre de siège droit et la boîte de rangement (10) ;
une partie de siège (6), capable d'être ouverte ou fermée par rapport à la partie ouverte (101) de la boîte de rangement (10) ;
une unité de batterie (13), disposée derrière la boîte de rangement (10) dans la direction avant-arrière du véhicule ; et
un dispositif de commande électronique de véhicule (14), muni d'un circuit de commande (142) et d'un circuit d'entraînement (141), et disposé derrière l'unité de batterie (13) dans la direction avant-arrière du véhicule, le circuit d'entraînement (141) est configuré pour entrainer un dispositif entraîné, dans lequel une quantité de génération de chaleur du circuit d'entraînement (141) est supérieure à une quantité de génération de chaleur du circuit de commande (142) ; et
le véhicule de type à enfourcher étant **caractérisé en ce que** :
la partie de siège (6) est munie d'un crochet de siège (61) disposé au niveau d'une partie arrière de la partie de siège (6) dans la direction avant-arrière du véhicule et s'étendant vers le bas dans la direction haut-bas du véhicule ;
un dispositif de verrouillage de siège (12) est muni d'un élément de verrou de siège (123) pour verrouiller le crochet de siège (61) et d'un élément d'actionnement de déverrouillage (126) utilisé pour déverrouiller l'élément de verrou de siège (123) ; et
l'unité de batterie (13) est disposée sous le dispositif de verrouillage de siège (12) dans la direction haut-bas du véhicule, et chevauche le dispositif de verrouillage de siège (12) sur une vue de dessus du véhicule ;
un bord supérieur (14a) du dispositif de commande électronique de véhicule (14) est disposé dans un état faisant davantage saillie vers le dessus que la partie de paroi supérieure (13a) de l'unité de batterie (13) et est situé davantage vers le dessus qu'au moins une partie du dispositif de verrouillage de siège (12) dans la direction haut-bas du véhicule ;
le véhicule de type à enfourcher étant en outre **caractérisé en ce qu'**il comprend une plaque d'espacement (15), la plaque d'espacement (15) étant disposée davantage vers le dessous que la partie de siège (6) et davantage vers le dessus que le dispositif de commande électronique de véhicule (14) dans la direction haut-bas du véhicule, et formant une ouverture (151) pour le passage du crochet de siège (61) ; et
l'ouverture (151) étant située davantage vers le dessus que le bord supérieur (14a) du dispositif de commande électronique de véhicule (14) et au-dessus du dispositif de verrouillage de siège (12) dans la direction haut-bas du véhicule, et chevauchant le dispositif de verrouillage de siège (12) sur une vue de dessus du véhicule.

2. Véhicule de type à enfourcher selon la revendication 1, dans lequel, dans la direction haut-bas du véhicule, une distance (W1) entre le bord supérieur (14a) du dispositif de commande électronique de véhicule (14) et la partie de paroi supérieure (13a) de l'unité de batterie (13) est plus longue qu'une distance (W2) entre le bord inférieur (12a) du dispositif de verrouillage de siège (12) et la partie de paroi supérieure (13a) de l'unité de batterie (13).

3. Véhicule de type à enfourcher selon la revendication 2, dans lequel une distance (W31) entre un bord gauche (12b) du dispositif de verrouillage de siège (12) et un bord gauche (13c) de l'unité de batterie (13) dans la direction gauche-droite du véhicule et une distance (W32) entre un bord droit (12c) du dispositif de verrouillage de siège (12) et un bord droit (13d) de l'unité de batterie (13) dans la direction gauche-droite du véhicule sont toutes deux plus longues ou égales à la distance (W2) entre le bord inférieur (12a) du dispositif de verrouillage de siège (12) et la partie de paroi supérieure (13a) de l'unité de batterie (13) dans la direction haut-bas du véhicule.

4. Véhicule de type à enfourcher selon au moins l'une des revendications 1 à 3, dans lequel l'unité de batterie (13) comprend un boîtier de batterie (132) pour loger une batterie (131), et
le dispositif de commande électronique de véhicule (14) est installé au niveau d'une partie de paroi arrière (132a) du boîtier de batterie (132) dans la direction avant-arrière du véhicule.

5. Véhicule de type à enfourcher selon la revendication 4, dans lequel un support de plaque d'immatriculation (16) s'étendant vers l'arrière dans la direction avant-arrière du véhicule à partir d'une partie inférieure du boîtier de batterie (132) est agencé sur le boîtier de batterie (132).

6. Véhicule de type à enfourcher selon la revendication 4 ou 5, dans lequel, sur une vue arrière du véhicule, une taille (W4) du dispositif de commande électronique de véhicule (14) dans la direction gauche-droite du véhicule est supérieure à une taille (W5) du dispositif de verrouillage de siège (12) dans la direction gauche-droite du véhicule, et est supérieure à une taille (W6) de la batterie (131) dans la direction gauche-droite du véhicule.

7. Véhicule de type à enfourcher selon au moins l'une des revendications 4 à 6, dans lequel comme pour une partie supérieure à un bord supérieur du boîtier de batterie (132) dans la direction haut-bas du véhicule dans le dispositif de commande électronique de véhicule (14), une taille d'au moins une partie dans la direction gauche-droite du véhicule est sensiblement la même qu'une taille (W7) de la partie de paroi arrière (132a) du boîtier de batterie (132) dans la direction gauche-droite du véhicule.

8. Véhicule de type à enfourcher selon au moins l'une des revendications 1 à 7, dans lequel le bord supérieur (14a) du dispositif de commande électronique de véhicule (14) est disposé d'une manière faisant davantage saillie vers le dessus que la partie de paroi supérieure (13a) de l'unité de batterie (13) dans la direction haut-bas du véhicule, et situé davantage au-dessus dans la direction haut-bas du véhicule qu'au moins une partie d'un élément d'actionnement de déverrouillage (126).

9. Véhicule de type à enfourcher selon au moins l'une des revendications 1 à 8, dans lequel un élément transversal (11) installé sur les cadres de siège gauche et droit (23L, 23R) est en outre agencé derrière la boîte de rangement (10) dans la direction avant-arrière du véhicule, et le dispositif de verrouillage de siège (12) étant disposé sur l'élément transversal (11).

10. Véhicule de type à enfourcher selon au moins l'une des revendications 1 à 9, dans lequel lorsque la partie de siège (6) est fermée, un écartement est formé au niveau d'une limite de la partie de siège (6) et de la boîte de rangement (10), et un espace (DS') au-dessus de la plaque d'espacement (15) communique avec l'écartement, de manière à former un chemin de dissipation thermique.
